# EUROPEAN PATENT APPLICATION

(11) **EP 4 434 357 A1**
(43) Date of publication of application: **25.09.2024**
(21) Application number: 22894717.2
(22) Date of filing: 11.11.2022
(51) Int. Cl.: A23L 31/10, A23L 29/00, A23L 33/14, A21D 2/08, A21D 2/16, A23G 9/36, A23G 9/32, A23L 2/52

(54) **COMPOSITION, AND PREPARATION METHOD THEREFOR AND APPLICATION THEREOF**

(30) Priority: 16.11.2021 CN 202111359573
(71) Applicant: Shanghai Changing Biotech Co.,Ltd, Shanghai 201318 (CN)
(72) Inventor: LUO, Bin, Shanghai 201318 (CN); XU, Yu, Shanghai 201318 (CN); ZHANG, Gaigai, Shanghai 201318 (CN); YANG, Xiuhua, Shanghai 201318 (CN); YANG, Mengchen, Shanghai 201318 (CN); WU, Rong, Shanghai 201318 (CN); ZHANG, Kexin, Shanghai 201318 (CN)
(74) Representative: Elzaburu S.L.P.
(86) International application number: PCT/CN2022/131380
(87) International publication number: WO 2023/088181

(57) **Abstract**

A composition, and a preparation method therefor and an application thereof. The composition comprises the following raw materials in percentage by weight: 2.5%-80% of an inactivated *Kluyveromyces* cell, 1%-50% of edible oil, and 18%-96.5% of water. The composition is stable and uniform, has high nutritional components such as protein and dietary fiber, and can be used in beverages and foods.

## Description

### Field of the invention

The present disclosure relates to the field of food processing, in particular to a composition, and preparation method therefor and application thereof.

### Background

*Kluyveromyces* is a kind of ascosporogenous yeast, which is a food-safe grade yeast. Among them, *Kluyveromyces marxianus* and *Kluyveromyces lactis* are the yeast which are widely used in industry and studied. For example, *Kluyveromyces marxianus* is widely found in yogurt, fruits and kefir. Due to the characteristics of high food safety, high growth rate, high biomass and high temperature resistance this yeast showed, it has been widely used in fermentation, development of lactobacillus beverages and other fields. However, the nutritional, physical and chemical properties of inactivated *Kluyveromyces* itself are less studied.

Emulsification technique is the most common process in the food field, especially in the production process of beverages and sauces. In order to obtain uniform and stable products without stratification, it is usually necessary to use emulsification technique to mix the water phase and oil phase evenly, and add a certain amount of one or more emulsifier composition, so that the different phases cannot repel too much and the same phase cannot gather easily between the two incompatible phases to ensure the long-term stability of the system, thereby ensuring the shelf life of the products. Emulsifier can be classified as a surfactant in the chemistry field, and a food additive in the food field. There are three types of emulsifiers commonly used in the processing of beverages and sauces: ionic, non-ionic and ampholytic. The characteristics and functions of these three types of emulsifiers are usually determined by the relative strength of the hydropathy of the hydrophilic groups and the hydrophobicity of the lipophilic groups in their molecules. A good emulsifier system must be fairly balanced between the hydrophilic groups and the hydrophobic groups. In the present food processing technology, emulsifiers are used to obtain a stable and uniform emulsification system, which usually requires strict theoretical calculation to balance the hydrophilic and hydrophobic groups in the emulsification system. Due to the diversification of food formulas, beyond theory it usually needs to rely on experience, or many experiments, or even simple and crude excessive use of emulsifiers to obtain a relative stable formula system. Therefore, it is an urgent industry problem need to develop a natural and simple technique which can make food containing both water phase and oil phase simultaneously maintain long-term stable and uniform.

### Summary

The problem solved in the present disclosure is to provide a food composition without food additives, which is stable and uniform, has high nutritional components such as protein and dietary fiber.

The present disclosure also provides applications of the food composition in the preparation of food products.

In order to achieve the above purposes, the present disclosure provides the following solutions: In one aspect, the present disclosure provides a composition comprising the following raw materials in weight percentage: 2.5%-80% of preceding inactivated *Kluyveromyces* cell, 1%-50% of edible oil, and 18%-96.5% of water. According to the studies in the present disclosures, the composition and proportion of the raw material is conducive to the formation of a stable and uniform emulsification system, wherein inactivated *Kluyveromyces* cells can physically isolate the mutual contact between the oil particles. In the case of no exogenous food additives such as emulsifiers, stabilizers and thickeners, they can be directly applied to the emulsification technique of water phase and oil phase to obtain a stable and uniform emulsification system, which can maintain for at least 7 days without demulsification and stratification.

In an embodiment in the present disclosure, the weight percentageof the preceding inactivated *Kluyveromyces* cell is 10-70%.

In an embodiment in the present disclosure, the weight percentage of the preceding edible oil is 10-40%.

In an embodiment in the present disclosure, the preceding composition may comprise the following raw materials in weight percentage: 2.5-25% of inactivated *Kluyveromyces* cell, 1-40% of edible oil, and 50-96.5% of water. For example, it can comprise 2.5%, 5%, 10%, 15%, 20% and 25% of inactivated *Kluyveromyces* cell, 1%, 2%, 4%, 8%, 12%, 16%, 20%, 25%, 30%, 35% and 40% of edible oil. The composition and proportion of the raw material is conducive to it maintaining for at least 28 days without demulsification and stratification.

In the implementation of the present disclosure, when the content of inactivated *Kluyveromyces* cells is 2.5-25%:
The frequency of components with particle size ≤5µm is 5-98%. For example, it can be 5%, 10%, 15%, 20%, 25%, 30%, 35%, 40%, 45%, 50%, 55%, 60%, 65%, 70%, 75%, 80%, 85%, 90%, 95%, 98%.

The frequency of components with particle size ≤10µm is 8-100%. For example, it can be 5%, 10%, 15%, 20%, 25%, 30%, 35%, 40%, 45%, 50%, 55%, 60%, 65%, 70%, 75%, 80%, 85%, 90%, 95%, 100%.

The frequency of components with particle size ≤50µm is 38-100%. For example, it can be 40%, 45%, 50%, 55%, 60%, 65%, 70%, 75%, 80%, 85%, 90%, 95%, 100%.

The frequency of components with particle size ≤100µm is about 100%.

This frequency distribution helps maintain the long-term stability of the composition system.

In a preferred embodiment in the present disclosure, the preceding composition comprises the following raw materials in weight percentage: 30-70% of inactivated *Kluyveromyces* cell, 1-30% of edible oil, and 18-69% of water. For example, it can comprise 30%, 35%, 40%, 45%, 50%, 55%, 60%, 65% and 70% of inactivated *Kluyveromyces* cell, 1%, 2%, 4%, 8%, 12%, 16%, 20%, 25% and 30% of edible oil. The composition and proportion of the raw material is conducive to it maintaining for at least 28 days without demulsification and stratification.

In the implementation of the present disclosure, when the content of inactivated *Kluyveromyces* cells is 30-70%:
The frequency of components with particle size ≤5µm is 54-100%. For example, it can be 55%, 60%, 65%, 70%, 75%, 80%, 85%, 90%, 95%.

The frequency of components with particle size ≤10µm is 55-100%. For example, it can be 55%, 60%, 65%, 70%, 75%, 80%, 85%, 90%, 95%.

The frequency of components with particle size ≤50µm is 75-100%. For example, it can be 75%, 80%, 85%, 90%, 95%.

The frequency of components with particle size ≤100µm is about 100%.

This frequency distribution helps maintain the composition system without demulsification and stratification for at least 28 days.

According to the studies in the present disclosure, the particle size of the inactivated *Kluyveromyces* cell in the preceding composition can be 1-7µm, such as 1µm, 2µm, 3µm, 4µm, 5µm, 6µm) and 7µm, which is conducive to isolate the mutual contact between the oil particles in the form of "caulking" in the oil-in-water (the proportion of water is greater than the proportion of oil) system, or enrich in water by polarity to form microparticles to isolate the mutual contact between the oil particles in the water-in-oil (the proportion of oil is greater than the proportion of water) system, thereby delaying the demulsification time of the composition system.

In a preferred embodiment in the present disclosure, the preceding composition is an oil-in-water system.

Specifically, the preceding inactivated *Kluyveromyces* cell is selected from one or more of *Kluyveromyces marxianus, Kluyveromyces lactis*, *Kluyveromyces hubeiensis, Kluyveromyces wickerhamii*, and *Kluyveromyces thermotolerans* cell. According to the studies in the present disclosure, the selection of these 5 yeast cells is conducive to obtaining the inactivated *Kluyveromyces* cells with the preceding particle size range.

Preferably, the preceding inactivated *Kluyveromyces* cell is *Kluyveromyces marxianus* and/or *Kluyveromyces lactis* cell. *Kluyveromyces marxianus* is an edible strain published by the National Health Commission. *Kluyveromyces lactis* is a strain published by the National Health Commission that can be used for health food.

In an preferable embodiment in the present disclosure, the particle size of the inactivated *Kluyveromyces* cell in the preceding composition can be 2-5µm, which is more conducive to isolating the mutual contact between the oil particles in the composition system where the components of water phase and oil phase coexist, thereby delaying demulsification time. According to the further studies in the present disclosure, when the preceding inactivated *Kluyveromyces* cell is *Kluyveromyces hubeiensis* cell, the particle size thereof can be 2-5µm. For example, it can be 2µm, 3µm, 4µm, 5µm.

When the preceding inactivated *Kluyveromyces* cell is *Kluyveromyces wickerhamii* cell, the particle size thereof can be 2-7µm. For example, it can be 2µm, 3µm, 4µm, 5µm, 6µm, 7µm. When the preceding inactivated *Kluyveromyces* cell is *Kluyveromyces thermotolerans* cell, the particle size thereof can be 2-5µm. For example, it can be 2µm, 3µm, 4µm, 5µm.

When the preceding inactivated *Kluyveromyces* cell is *Kluyveromyces marxianus* cell, the particle size thereof can be 2-7µm. For example, it can be 2µm, 3µm, 4µm, 5µm, 6µm, 7µm.

When the preceding inactivated *Kluyveromyces* cell is *Kluyveromyces lactis* cell, the particle size thereof can be 2-7µm. For example, it can be 2µm, 3µm, 4µm, 5µm, 6µm, 7µm.

According to the studies in the present disclosure, the particle size of the edible oil in the preceding composition can be 1-100µm. Controlling the particle size of the edible oil in the composition within the range of 1-100µm is more conducive to achieving the balance of processing technique and product stability. If the particle size of the edible oil in the composition is too large, it is difficult for inactivated *Kluyveromyces* cells to play an effective physical isolation role, so that the oil particles combine into large oil droplets quickly, which leads to demulsification and stratification of the system and effects on stability of the products.

In a specific embodiment in the present disclosure, the particle size of the edible oil in the preceding composition is 5-100µm, and can further be 5-10µm, 5-50µm, 10-50µm, 10-100µm and 50-100µm. For example, it can be 5µm, 10µm, 15µm, 20µm, 25µm, 30µm, 35µm, 40µm, 45µm, 50µm, 55µm, 60µm, 65µm, 70µm, 75µm, 80µm, 85µm, 90µm, 95µm.

The particle size of the edible oil in the composition is calculated by the average particle size of compositions in the system, the average particle size of yeast cells and the particle size frequency of edible oil. The average particle size of the yeast cells added in the composition, the proportion of each component, and the total frequency of particle size distribution in the system are known. The particle size frequency of edible oil = the total frequency of particle size distribution in the system - the average particle size frequency of the yeast cells.

Specifically, the preceding inactivated *Kluyveromyces* cell comprises 25-55% of protein, 1-5% of fat, and 15-30% of dietary fiber. It is characterized by high protein, low fat (including saturated fat and trans fat), and rich soluble dietary fiber, which can be applied in food as a nutritional source. In a preferred embodiment in the present disclosure, the preceding inactivated *Kluyveromyces* cell comprises 30.5-52.5% of protein, 2.1-4.8% of fat, and 15.5-29.0% of dietary fiber.

Specifically, the preceding inactivated *Kluyveromyces* cell comprises 6-10% of water, and 2.5-10.5% of ash.

In a embodiment in the present disclosure, the preceding inactivated *Kluyveromyces* cell can be dry inactivated *Kluyveromyces* cell mycelium (inactivated *Kluyveromyces* cell dry powder), dehydrated inactivated Kluyveromyces cell, or inactivated *Kluyveromyces* cell mycelium suspension.

In a preferred embodiment in the present disclosure, the preceding inactivated *Kluyveromyces* cell is inactivated *Kluyveromyces* cell mycelium suspension.

In a preferred embodiment in the present disclosure, the preceding inactivated *Kluyveromyces* cell is dry inactivated *Kluyveromyces* cell mycelium. When it is dry *Kluyveromyces* cell mycelium, it is more convenient for the preservation, transportation, storage and use of the preceding composition.

In an embodiment in the present disclosure, the edible oil in the present disclosure is selected from one or more of soybean oil, rapeseed oil, high oleic sunflower seed oil, medium chain triglyceride, canola oil, coconut oil, corn oil, sesame oil, tea seed oil, rice bran oil, olive oil, linseed oil, safflower seed oil, grape seed oil, walnut oil, palm oil, peanut oil, and blend oil.

In a preferred embodiment in the present disclosure, the edible oil in the present disclosure is selected from one or more of coconut oil, medium chain triglyceride, canola oil, high oleic sunflower seed oil, olive oil, and rapeseed oil.

The preceding inactivated *Kluyveromyces* cell can be prepared by the method comprising the following steps:
(1) Selecting a medium containing carbon source, nitrogen source and salts to culture the *Kluyveromyces* strain for 15-40 hours;
(2) Regulating medium pH to 4.0-8.0. Obtaining the inactivated *Kluyveromyces* cell by heating and inactivating after fermentation at 25-50°C.

Specifically, the preceding medium containing carbon source, nitrogen source and salts may comprise but not be limited to one or more carbon source, nitrogen source and salts composition selected from molasses, glucose, starch, dipotassium phosphate, corn pulp dry powder, sodium hydroxide, magnesium sulfate, ammonium sulfate, ammonia, urea, sodium chloride, yeast extract, peptone, potassium dihydrogen phosphate, potassium hydroxide, methionine, cysteine, alanine, glycine and glutamic acid.

In an embodiment in the present disclosure, the preceding medium containing carbon source, nitrogen source and salts can comprise glucose, magnesium sulfate, ammonium sulfate, yeast extract, potassium dihydrogen phosphate. Specifically, the weight percentage of each component thereof can be 3.5-4.5% of glucose, 0.2-7% of molasses, 0.1-0.3% of corn pup dry powder, 0.02-0.15% of magnesium sulfate, 0.5-0.6% of ammonium sulfate, 0.6-0.9% of yeast extract, 0.4-0.6% of potassium dihydrogen phosphate. It can also comprise other inorganic salt components such as copper sulfate, ferrous sulfate, manganese sulfate, cobalt chloride, zinc sulfate, and other nutrients such as methionine, alanine, cysteine, glycine, the rest is water.

Specifically, the culture time of the preceding inactivated *Kluyveromyces* in the medium can be 15-40h. For example, it can be 15h, 20h, 25h, 30h, 35h or 40h.

Specifically, the pH of the preceding medium can be 4.0-8.0. For example, it can be 4, 4.5, 5.0, 5.5, 6, 6.5, 7, 7.5, 8.

Specifically, the preceding fermentation temperature can be 25-50°C. For example, it can be 25-30°C, 25-35°C, 25-40°C, 25-45°C, 30-35°C, 30-40°C, 30-45°C, 30-50°C, 35-40°C, 35-45°C, 35-50°C, 40-45°C, 45-50°C.

Specifically, the preceding fermentation time can be 15-40h. For example, it can be 15h, 20h, 22h, 24h, 26h, 28h, 30h, 32h, 36h, 40h.

In an embodiment in the present disclosure, the preceding dry inactivated *Kluyveromyces* cell mycelium, dehydrated inactivated Kluyveromyces cell, and inactivated *Kluyveromyces* cell mycelium suspension are prepared by the following methods:
Selecting a medium containing carbon source, nitrogen source and salts to culture the *Kluyveromyces* strain for 15-40 hours; regulating medium pH to 4.0-8.0, heating and inactivating after fermentation at 25-50°C for 15-40h, and obtaining the inactivated *Kluyveromyces* pulp after removing the supernatant by centrifugation; post-treating the the *Kluyveromyces* pulp to obtain treated pulp, which is inactivated *Kluyveromyces* cell mycelium suspension.

Then drying the treated pulp to obtain dry inactivated *Kluyveromyces* cell mycelium, and dehydrating to obtain dehydrated inactivated *Kluyveromyces* cell.

In the implementation of the present disclosure, the drying treatment is commonly used drying techniques in the field such as freeze drying, spray drying and baking drying. The dehydrating treatment is commonly used technique in the field. It is not specifically limited in the present disclosure.

Specifically, the preceding heating and inactivation can be implemented at 100°C; the time of heating and inactivation can be longer than 20min. For example, it can be 20min, 25min, 30min, 35min, 40min.

The preceding post-treatment process includes one or more selected from water cleaning, pH regulation, alcohol precipitation, alcohol extraction, activated carbon adsorption, ozone treatment, protease treatment, cellulase treatment, hemicellulase treatment, lipase treatment, freezing treatment, solution pressurization treatment and heating treatment. The post-treatment process is commonly used technique in the field. It is not specifically limited in the present disclosure. The preceding protease can be endopeptidase or exopeptidase, which can be derived from microorganisms, plants or animals. For example, it can be serine protease, cysteine protease, aspartic protease, protease derived from microorganisms, papain and bromelain derived from plants, trypsin, pepsin and cathepsin derived from animals, etc. The preceding cellulase is an enzyme that can degrade cellulose to produce glucose, such as β-1,4- glucan -4- glucan hydrolase.

In another aspect, the present disclosure provides a preparation method of the preceding composition, comprising:
(1) Mixing inactivated *Kluyveromyces* cell with water to form a cell suspension;
(2) Adding edible oil in the process of shear emulsifying of the preceding suspension, and keeping shear emulsifying until the particle size of edible oil is 1-100µm.

In an embodiment in the present disclosure, the inactivated *Kluyveromyces* cell is inactivated *Kluyveromyces* cell mycelium suspension or inactivated *Kluyveromyces* cell dry powder.

The proportion of inactivated *Kluyveromyces* cell in the composition described in the present disclosure is not affected by the form of inactivated *Kluyveromyces* cell mycelium added. Understandably, when the inactivated *Kluyveromyces* cell used is inactivated *Kluyveromyces* cell dry powder, it can be added directly according to the preceding proportion. When the inactivated *Kluyveromyces* cell used is inactivated *Kluyveromyces* cell mycelium suspension, the preceding proportion of inactivated *Kluyveromyces* cell in the composition can be calculated by number of cells.

In another aspect, the present disclosure provides a food product comprising the preceding composition.

In an embodiment in the present disclosure, when the content of inactivated *Kluyveromyces* cell is 2.5-25%, the composition is beverage, wherein comprises 2.5-25% of inactivated *Kluyveromyces* cell, 1-40% of edible oil, and 40-96.5% of water.

In an embodiment in the present disclosure, when the content of inactivated *Kluyveromyces* cell is 30-70%, the composition is sauce, wherein comprises 30-70% of inactivated *Kluyveromyces* cell, 1-30% of edible oil, and 18-69% of water.

In another aspect, the present disclosure provides an application of the preceding composition in the preparation of food products.

In an embodiment in the present disclosure, the preceding composition is preferably used in the preparation of biscuits, bread, baked goods, puffed food, freeze-dry food, ice cream, and dehydrated food. The composition in the present disclosure has a high protein content, which can be added to food products as a protein substitute. Meanwhile, the food composition in the present disclosure characterized by low fat (saturated fat, trans fat), and rich soluble dietary fiber, which has good food value.

In the implementation of the present disclosure, when the preceding beverage of food composition is used to prepare food products, the amount added thereof is greater than 10%. When the preceding sauce of food composition is used to prepare food products, the amount added thereof is greater than 3%.

### Brief Description of the Drawing

FIG. 1 shows the measurement schematic of inactivated *Kluyveromyces hubeiensis* with stable effect in Example 1 by scanning electron microscope.
FIG. 2 shows the measurement schematic of inactivated *Kluyveromyces wickerhamii* with stable effect in Example 1 by scanning electron microscope.
FIG. 3 shows the measurement schematic of inactivated *Kluyveromyces thermotolerans* with stable effect in Example 1 by scanning electron microscope.
FIG. 4 shows the measurement schematic of inactivated *Kluyveromyces marxlanus* with stable effect in Example 1 by scanning electron microscope.
FIG. 5 shows the measurement schematic of inactivated *Kluyveromyces lactis* with stable effect in Example 1 by scanning electron microscope.
FIG. 6 shows observation photos under microscope of the compositions with different proportions in Example 8.

### Detailed description of the invention.

In order to illustrate the technology solutions in the embodiments in the present disclosure or in the prior art more clearly, the drawings required to be used in the description of the embodiments or the prior art are briefly described below. Obviously, the drawings described below are only one embodiment of the present disclosure. Other embodiments can be obtained according to these drawings for those skilled in the art.

### I. Definitions

In the present disclosure, unless otherwise specified, scientific and technical terms used herein have the meanings commonly understood by those skilled in the art. Moreover, protein and nucleic acid chemistry, molecular biology, cell and tissue culture, microbiology, and immunology-related terms and laboratory procedures used herein are terms and conventional procedures widely used in corresponding arts. Meanwhile, in order to better understand the present disclosure, definitions and explanations of relevant terms are provided below.

For the purpose of a clear and concise description, characteristics are described herein as a part of identical or separate embodiments. However, understandably, the scope of the present disclosure may include embodiments having a combination of all or some of the characteristics described.

As used herein, unless otherwise specified, the term "about" or "approximate" means within plus or minus 10% of a given value or range. In the case that integers are required, the term means rounding up or down to the nearest integer within plus or minus 10% of a given value or range. As used herein, unless otherwise specified, the term "comprise" "include" "have" "contain", including their grammatical equivalents, should generally be understood to be open and non-limited, such as not excluding other elements or steps not mentioned.

As used herein, the term "fermentation" refers to the process by which specific metabolic pathways in biological cells are used to transform external substrates to produce target products or mycelia needed by people.

The term "shear emulsifying" refers to that the materials are thrown radially to the narrow precise gap between the stator and the rotor under the action of centrifugal force produced by high-speed and strongly rotating rotor, which meanwhile under the action of centrifugal extrusion, impact and other forces, and/or high-pressure homogenizing treatment added in the later stage so that materials can be evenly dispersed, mixed and emulsified.

The term "food additive" means any artificially synthetic or natural substance put into food to improve its quality, color, fragrance or taste, or for the sake of preservation, fresh-keeping and processing. Spices for food, bodying agent in gum base candies, and processing AIDS for food industry are also included.

The term "drying" refers to the operation of using heat energy to vaporize the wet component of a wet material, and using air flow or vacuum to carry away the vaporized wet component, thereby obtaining a dry material.

### Detailed description

*Kluyveromyces* CJ3113 used in the embodiments in the present disclosure is preserved in the China Center for Type Culture Collection (CCTCC). The preservation address is the Collection Center of Wuhan University, Wuhan City, Hubei Province. The preservation number is CCTCC No: M20211265, whose Latin scientific name is *Kluyveromyces marxianus.* The preservation date is October 13^{th}, 2021.

*Kluyveromyces lactis* was bought from China Center of Industrial Culture Collection (CICC). The preservation number is CICC 32428.

*Kluyveromyces hubeiensis*, *Kluyveromyces wickerhamii* and *Kluyveromyces thermotolerans* was bought from China General Microbiological Culture Collection Center (CGMCC). The preservation numbers are CGMCC 2.4330, CGMCC 2.4309 and CGMCC 2.4072, respectively.

### Example

### Example 1. Determination of Particle Size with Stable Effect of Kluyveromyce

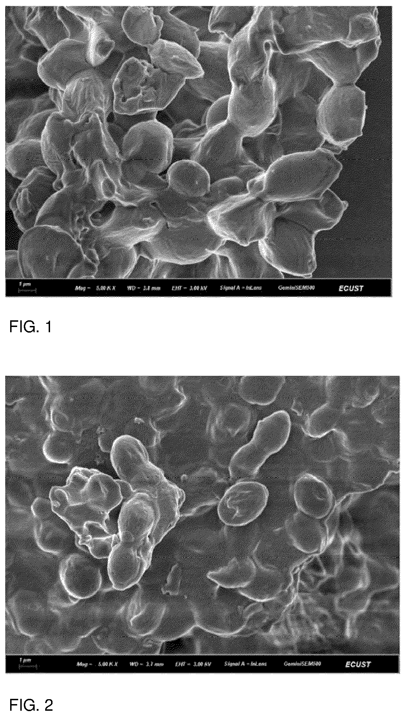

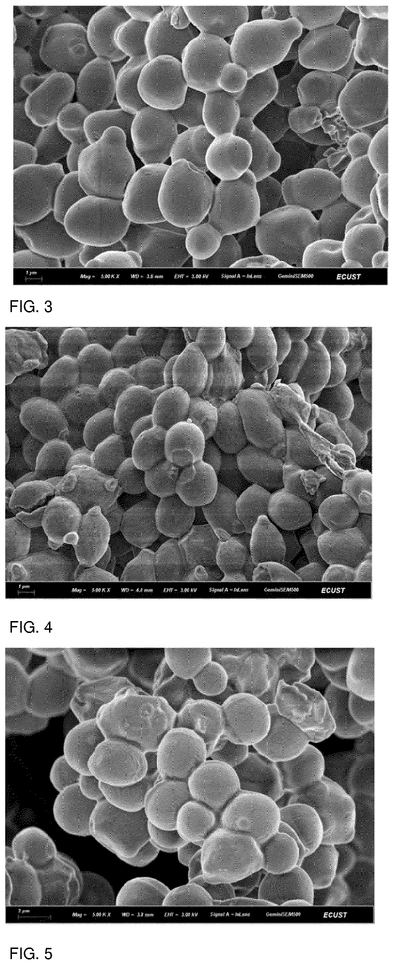

By observation and measurement through scanning electron microscope (ZEISS GeminiSEM500, field emission), the minimum (µm) and maximum (µm) particle size with stable effect of inactivated *Kluyveromyces marxianus,* inactivated *Kluyveromyces lactis*, inactivated *Kluyveromyces hubeiensis,* inactivated *Kluyveromyces wickerhamii* and inactivated *Kluyveromyces thermotolerans* were obtained, which are shown in Table 1. The measurement schematics by scanning electron microscope are shown in FIG. 1-5.

**Table 1. Minimum and maximum particle size with stable effect of Kluyveromyce**

| Strain name | Minimum particle size with stable effect (µm) | Maximum particle size with stable effect (µm) |
|---|---|---|
| *Kluyveromyces hubeiensis* | 2 | 5 |
| *Kluyveromyces wickerhamii* | 2 | 7 |
| *Kluyveromyces thermotolerans* | 2 | 5 |
| *Kluyveromyces marxianus* | 2 | 7 |
| *Kluyveromyces lactis* | 2 | 7 |

### Example 2. Preparation of Inactivated Kluyveromyces hubeiensis Cell Dry Powder

*Kluyveromyces hubeiensis* strain was cultured in the medium containing carbon source, nitrogen source and salts (4.5% of glucose, 0.2% of molasses, 0.2% of corn pulp dry powder, 0.02% of magnesium sulfate, 0.6% of ammonium sulfate, 0.6% of yeast extract, 0.6% of potassium dihydrogen phosphate, 6ppm copper sulfate, 12ppm ferrous sulfate, 15ppm manganese sulfate, 6ppm cobalt chloride, 20ppm zinc sulfate, 8ppm methionine, 5ppm alanine, 2ppm cysteine, 5ppm glycine); regulating medium pH to 4.0-5.0, and heating at 100°C for 20min after fermentation at 25-30°C for 40h, the *Kluyveromyces* pulp was obtained after removing the supernatant by centrifugation; the *Kluyveromyces* pulp was post-treated as follows: the pulp was obtained after centrifugation, soaked in deionized water five times the pulp for 30min, and adjusted pH to 5.0 by food-grade lactic acid. 0.01% of acid protease and 0.01% of papain by weight of the pulp was added to react at 50°C for 12h. Particle size was measured by laser particle size analyzer. The pH was adjusted to 6.6-6.8 by food-grade sodium bicarbonate. 0.02% of β-glucolase and 0.01% of alkaline protease by weight of the pulp was added to react at 55°C for 36h. Particle size was measured by laser particle size analyzer. Adsorbing and decolorizing by activated carbon, the inactivated *Kluyveromyces* cell mycelium suspension was obtained. The suspension was frozen at -20°C for 1 h cooling treatment, and soaked to sterilize for 60min in 85% ethanol solution which was three times the weight of the pulp. The deionized water one times the weight of the pulp was mixed after recovering ethanol. The solution was sterilized for 1h by passing ozone in. The *Kluyveromyces hubeiensis* cell dry powder was obtained by spray drying after pasteurization or pressure sterilization.

### Example 3. Preparation of Inactivated Kluyveromyces wickerhamii Cell Dry Powder

*Kluyveromyces wickerhamii* strain was cultured in the medium containing carbon source, nitrogen source and salts (4.2% of glucose, 0.5% of molasses, 0.1% of corn pulp dry powder, 0.03% of magnesium sulfate, 0.5% of ammonium sulfate, 0.6% of yeast extract, 0.4% of potassium dihydrogen phosphate, 5ppm copper sulfate, 10ppm ferrous sulfate, 10ppm manganese sulfate, 5ppm cobalt chloride, 18ppm zinc sulfate, 5ppm methionine, 6ppm alanine, 3ppm cysteine, 1ppm glycine); regulating medium pH to 4.0-5.0, and heating at 100°C for 30min after fermentation at 45-50°C for 15h, the *Kluyveromyces* pulp was obtained after removing the supernatant by centrifugation; the *Kluyveromyces* pulp was post-treated as follows: the pulp was obtained after centrifugation, soaked in deionized water five times the pulp for 60min, and adjusted pH to 5.0 by food-grade lactic acid. 0.02% of acid protease and 0.015% of papain by weight of the pulp was added to react at 50°C for 6h. Particle size was measured by laser particle size analyzer. The pH was adjusted to 6.6-6.8 by food-grade sodium bicarbonate. 0.015% of β-glucolase and 0.015% of alkaline protease by weight of the pulp was added to react at 55°C for 24h. Particle size was measured by laser particle size analyzer. Adsorbing and decolorizing by activated carbon, the inactivated *Kluyveromyces* cell mycelium suspension was obtained. The suspension was frozen at -20°C for 1 h cooling treatment, and soaked to sterilize for 60min in 85% ethanol solution which was three times the weight of the pulp. The deionized water one times the weight of the pulp was mixed after recovering ethanol. The solution was sterilized for 1h by passing ozone in. The *Kluyveromyces wickerhamii* cell dry powder was obtained by spray drying after pasteurization or pressure sterilization.

Example 4. Preparation of Inactivated *Kluyveromyces thermotolerans* Cell Dry Powder *Kluyveromyces thermotolerans* strain was cultured in the medium containing carbon source, nitrogen source and salts (3.5% of glucose, 0.7% of molasses, 0.3% of corn pulp liquor dry powder, 0.02% of magnesium sulfate, 0.6% of ammonium sulfate, 0.7% of yeast extract, 0.4% of potassium dihydrogen phosphate, 1ppm copper sulfate, 3ppm ferrous sulfate, 15ppm manganese sulfate, 3ppm cobalt chloride, 10ppm zinc sulfate, 15ppm methionine, 3ppm alanine, 1ppm cysteine, 9ppm glycine); regulating medium pH to 7.5-8.0, and heating at 100°C for 25min after fermentation at 30-35°C for 30h, the *Kluyveromyces* pulp was obtained after removing the supernatant by centrifugation; the *Kluyveromyces* pulp was post-treated as follows: the pulp was obtained after centrifugation, soaked in deionized water five times the pulp for 30min, and adjusted pH to 5.0 by food-grade lactic acid. 0.01% of acid protease and 0.01% of papain by weight of the pulp was added to react at 50°C for 12h. Particle size was measured by laser particle size analyzer. The pH was adjusted to 6.6-6.8 by food-grade sodium bicarbonate. 0.02% of β-glucolase and 0.01% of alkaline protease by weight of the pulp was added to react at 55°C for 30h. Particle size was measured by laser particle size analyzer. Adsorbing and decolorizing by activated carbon, the inactivated *Kluyveromyces* cell mycelium suspension was obtained. The suspension was frozen at -20°C for 1h cooling treatment, and soaked to sterilize for 60min in 85% ethanol solution which was three times the weight of the pulp. The deionized water one times the weight of the pulp was mixed after recovering ethanol. The solution was sterilized for 1h by passing ozone in. The *Kluyveromyces thermotolerans* cell dry powder was obtained by spray drying after pasteurization or pressure sterilization.

### Example 5. Preparation of Inactivated Kluyveromyces marxianus Cell Dry Powder

*Kluyveromyces marxianus* strain was cultured in the medium containing carbon source, nitrogen source and salts (4.5% of glucose, 0.2% of molasses, 0.2% of corn pulp dry powder, 0.05% of magnesium sulfate, 0.5% of ammonium sulfate, 0.8% of yeast extract, 0.6% of potassium dihydrogen phosphate, 10ppm copper sulfate, 5ppm ferrous sulfate, 15ppm manganese sulfate, 7ppm cobalt chloride, 2ppm zinc sulfate, 3ppm methionine, 1ppm alanine, 6ppm cysteine, 3ppm glycine); regulating medium pH to 5.5-6.5, and heating at 100°C for 30min after fermentation at 25-30°C for 24h, the *Kluyveromyces* pulp was obtained after removing the supernatant by centrifugation; the *Kluyveromyces* pulp was post-treated as follows: the pulp was obtained after centrifugation, soaked in deionized water five times the pulp for 30min, and adjusted pH to 5.0 by food-grade lactic acid. 0.015% of acid protease and 0.015% of papain by weight of the pulp was added to react at 50°C for 6h. Particle size was measured by laser particle size analyzer. The pH was adjusted to 6.6-6.8 by food-grade sodium bicarbonate. 0.01% of β-glucolase and 0.02% of alkaline protease by weight of the pulp was added to react at 55°C for 24h. Particle size was measured by laser particle size analyzer. Adsorbing and decolorizing by activated carbon, the inactivated *Kluyveromyces* cell mycelium suspension was obtained. The suspension was frozen at -20°C for 1h cooling treatment, and soaked to sterilize for 60min in 85% ethanol solution which was three times the weight of the pulp. The deionized water one times the weight of the pulp was mixed after recovering ethanol. The solution was sterilized for 1h by passing ozone in. The *Kluyveromyces marxianus* cell dry powder was obtained by spray drying after pasteurization or pressure sterilization.

### Example 6. Preparation of Inactivated Kluyveromyces lactis Cell Dry Powder

*Kluyveromyces lactis* strain was cultured in the medium containing carbon source, nitrogen source and salts (4.2% of glucose, 0.5% of molasses, 0.1% of corn pulp dry powder, 0.15% of magnesium sulfate, 0.6% of ammonium sulfate, 0.9% of yeast extract, 0.5% of potassium dihydrogen phosphate, 5ppm copper sulfate, 10ppm ferrous sulfate, 10ppm manganese sulfate, 5ppm cobalt chloride, 18ppm zinc sulfate, 5ppm methionine, 6ppm alanine, 3ppm cysteine, 1ppm glycine); regulating medium pH to 4.0-5.0, and heating at 100°C for 20min after fermentation at 40-45°C for 28h, the *Kluyveromyces* pulp was obtained after removing the supernatant by centrifugation; the *Kluyveromyces* pulp was post-treated as follows: the pulp was obtained after centrifugation, soaked in deionized water five times the pulp for 60min, and adjusted pH to 5.0 by food-grade lactic acid. 0.02% of acid protease and 0.02% of papain by weight of the pulp was added to react at 50°C for 6h. Particle size was measured by laser particle size analyzer. The pH was adjusted to 6.6-6.8 by food-grade sodium bicarbonate. 0.01% of β-glucolase and 0.015% of alkaline protease by weight of the pulp was added to react at 55°C for 36h. Particle size was measured by laser particle size analyzer. Adsorbing and decolorizing by activated carbon, the inactivated *Kluyveromyces* cell mycelium suspension was obtained. The suspension was frozen at -20°C for 1h cooling treatment, and soaked to sterilize for 60min in 85% ethanol solution which was three times the weight of the pulp. The deionized water one times the weight of the pulp was mixed after recovering ethanol. The solution was sterilized for 1h by passing ozone in. The *Kluyveromyces lactis* cell dry powder was obtained by spray drying after pasteurization or pressure sterilization.

### Example 7. Nutritional Composition Determination of Kluyveromyces Cell Dry Powder Prepared in Example 2-6

The compositions of protein, fat, dietary fiber, water, ash and total nitrogen in the *Kluyveromyces* cell dry powder prepared in Example 2-6 were analyzed. Water content was determined by atmospheric dry weight method (105°C, 3h). Total nitrogen was determined by Kjeldahl method. Ash content was determined by Muffle furnace direct ashing method. Dietary fiber content was determined by AOAC 991.43 standard. Protein content was determined by AOAC 979.09 standard. Fat content was determined by AOAC 996.06 standard. Water content was determined by AOAC 925.09 method. Ash content was determined by AOAC 942.05 method. The analysis results are shown in Table 2:

**Table 2. Nutritional composition of Kluyveromyces cell dry powder prepared in Example 2-6**

| Composition | Dry powder in Example 2 /100g | Dry powder in Example 3 /100g | Dry powder in Example 4 /100g | Dry powder in Example 5 /100g | Dry powder in Example 6 /100g |
|---|---|---|---|---|---|
| Water/g | 6.0 | 10.0 | 7.9 | 8.9 | 9.7 |
| Ash/g | 7.5 | 10.5 | 10.1 | 2.5 | 8.0 |
| Protein/g | 50.9 | 30.5 | 52.5 | 47.6 | 43.7 |
| Fat/g | 2.6 | 4.8 | 4.2 | 2.1 | 3.5 |
| Dietary fiber/g | 24.3 | 29.0 | 15.5 | 28.8 | 25.5 |

### Example 8. Stable System Test of Composition

The inactivated *Kluyveromyces* cell dry powder prepared in Example 5 was used as a food raw material for the development of food formula, which could partially or completely substitute (the use of) emulsifier, thickener and stabilizer in food.

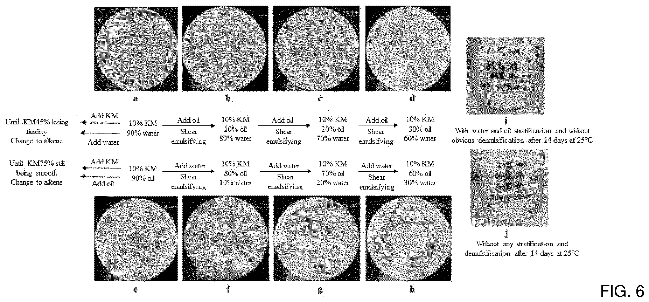

FIG. 6a-h show the stability of the inactivated *Kluyveromyces marxianus* (KM) in the solution of two different systems (oil in water emulsification system and water in oil emulsification system) with four different characters (pure water (FIG. 6a), oil in water (FIG. 6b-d), pure oil (FIG. 6e), and water in oil (FIG. 6f-h)) by observing under a 400-fold microscopic field of view. FIG. i and j optionally show the photos of the composition systems under two different proportions and statuses. FIG. i is the example photo of the composition system without any stratification and demulsification after being placed for 7 days but with water and oil stratification after being placed for 14 days. FIG. j is the photo of the stable composition system without any stratification and demulsification after being placed for 14 days.

The food composition comprising inactivated *Kluyveromyces* cells has characters of stable and uniform (no stratification, no demulsification) without the use of exogenous emulsifier, thickener, and stabilizer. Specifically, it can be divided into three characters (A is defined as no demulsification and no stratification at all; B is defined as slight demulsification and a little amount of stratification at the top of the product; C is defined as obvious demulsification and a complete oil and water stratification of product) to analyze:
1. If the proportion of water was greater than the proportion of oil in the composition system, an oil in water emulsification system was formed. Due to the particle size range of the inactivated wall-unbroken *Kluyveromyces* cells in the water phase was 2-5µm, enrichment played a "caulking" role. After emulsification of the composition system, the particle size range of the oil was 1-100µm. Mutual contact between the oil particles was isolated physically because of the "caulking" of the small inactivated wall-unbroken *Kluyveromyces* cells, delaying the demulsification time.
2. In the composition system, a water-in-oil system was formed with the increase of the proportion of oil. The particle size of oil increased in the water-in-oil system. Due to polarity, inactivated wall-unbroken *Kluyveromyces* cells in the oil tended to accumulate in the water phase, and finally formed micro-particles with particle size range of 10-100µm in the water phase. These micro-particles physically isolated the mutual contact between the oil particles, delaying the demulsification time.
3. In the composition system, without any water, the system was composed of pure olive oil and inactivated wall-unbroken *Kluyveromyces* cells. The inactivated *Kluyveromyces* cells dispersed in the oil, forming a solution system with a central cell mass with particle size of 50-100µm and an oil-coated outer layer. The solution system was demulsified and stratified after being placed for 7 days, and the stability of the solution system was poor (Group 5 in Table 3, FIG. 6e).

Finding the method with an appropriate proportion of water and oil based on the fixed yeast addition, it is supposed that the theoretical stable status can be reached when the contents of inactivated *Kluyveromyces* cell, oil and water in the composition in the present disclosure are as follows:
10-70% of inactivated *Kluyveromyces* cell
10-40% of edible oil
The rest is water.

**Table 3. Proportion in test**

| Group | | a | b | c | d | e | f | 9 | h | i | j |
|---|---|---|---|---|---|---|---|---|---|---|---|
| Proportion | *Kluyveromyces* cell dry powder (%) | 10 | 10 | 10 | 10 | 10 | 10 | 10 | 10 | 10 | 20 |
| | Water (%) | 90 | 80 | 70 | 60 | 0 | 10 | 20 | 30 | 45 | 40 |
| | Olive oil (%) | 0 | 10 | 20 | 30 | 90 | 80 | 70 | 60 | 45 | 40 |
| Results of stability test | Demulsification/ stratification of 7 days | C | A | A | A | C | B | A | A | A | A |
| | Demulsification/ stratification of 14 days | C | A | A | A | C | C | B | A | B | A |
| | Demulsification/ stratification of 21 days | C | A | A | A | C | C | C | B | B | B |
| | Demulsification/ stratification of 28 days | C | A | A | A | C | C | C | C | B | B |

### Example 9. Preparation of Beverages Containing Inactivated Kluyveromyces cells and Rapeseed Oil

Beverage of food with required particle size distribution was prepared by emulsification in a certain weight percentage of inactivated *Kluyveromyces* cell dry powder prepared in Example 2-6, rapeseed oil and water. The specific steps are as follows:
(1) Mixing the *Kluyveromyces* cell dry powder with water and stirring until evenly diffused;
(2) Starting to shear emulsify by using emulsifying machine. Adding rapeseed oil slowly during the shearing process to keep the emulsification. Sampling every 2 minutes and detecting the particle size distribution of the sample by laser particle size analyzer, further emulsifying until the required particle size distribution to stop and obtain beverage of food composition containing inactivated *Kluyveromyces* cells. Observing the stability of the product at 25°C.

The results of the percentage content by weight of inactivated *Kluyveromyces* cell dry powder, rapeseed oil and water, the particle size distribution of composition, and the results of stability test are shown in Table 4, Table 5, Table 6, Table 7, and Table 8 (A is defined as no demulsification and no stratification at all; B is defined as slight demulsification and a little amount of stratification at the top of the product; C is defined as obvious demulsification and a complete oil and water stratification of product):

**Table 4. Results of composition, particle size distribution and stability test of beverages containing inactivated Kluyveromyces cells in Example 2**

| Proportion | | | Particle size distribution (Frequency%) | | | | Stability Test | | | |
|---|---|---|---|---|---|---|---|---|---|---|
| Dry pow der % | Rap ese ed oil% | Wate r% | ≤5µm | ≤10µm | ≤50µm | ≤100µm | De m uls ific ati on of 7 da ys | De m uls ific ati on of 14 da ys | De m uls ific ati on of 21 da ys | De m uls ific ati on of 28 da ys |
| 2.5 | 1 | 96.5 | 89.84 | 93.64 | 99.51 | 100.00 | A | A | A | A |
| 2.5 | 4 | 93.5 | 63.67 | 67.51 | 89.91 | 99.87 | A | A | A | A |
| 2.5 | 8 | 89.5 | 49.38 | 59.93 | 73.37 | 100.00 | A | A | A | B |
| 2.5 | 12 | 85.5 | 43.02 | 58.93 | 79.74 | 100.00 | A | A | B | B |
| 2.5 | 16 | 81.5 | 38.75 | 46.92 | 62.92 | 98.99 | A | A | B | C |
| 2.5 | 20 | 77.5 | 12.91 | 14.24 | 69.75 | 99.40 | A | B | B | C |
| 2.5 | 25 | 72.5 | 10.84 | 11.98 | 56.46 | 99.94 | A | B | B | C |
| 2.5 | 30 | 67.5 | 10.98 | 35.09 | 59.85 | 96.92 | A | B | C | C |
| 2.5 | 40 | 57.5 | 5.98 | 8.44 | 39.13 | 94.32 | A | C | C | C |
| 5 | 1 | 94 | 86.94 | 97.90 | 99.58 | 100.00 | A | A | A | A |
| 5 | 4 | 91 | 61.21 | 68.87 | 79.10 | 100.00 | A | A | A | A |
| 5 | 8 | 87 | 43.04 | 73.59 | 89.48 | 99.40 | A | A | A | A |
| 5 | 12 | 83 | 35.94 | 50.33 | 69.10 | 100.00 | A | A | A | B |
| 5 | 16 | 79 | 28.44 | 34.59 | 59.37 | 97.00 | A | A | A | B |
| 5 | 20 | 75 | 26.68 | 44.52 | 59.49 | 100.00 | A | A | B | C |
| 5 | 25 | 70 | 23.43 | 55.43 | 78.10 | 100.00 | A | A | B | C |
| 5 | 30 | 65 | 15.34 | 23.34 | 56.92 | 99.40 | A | A | B | C |
| 5 | 40 | 55 | 14.54 | 30.20 | 57.55 | 94.50 | A | B | B | C |
| 10 | 1 | 89 | 92.44 | 93.44 | 99.43 | 100.00 | A | A | A | A |
| 10 | 4 | 86 | 78.96 | 96.23 | 98.31 | 100.00 | A | A | A | A |
| 10 | 8 | 82 | 59.84 | 67.98 | 74.74 | 97.53 | A | A | A | A |
| 10 | 12 | 78 | 58.58 | 60.22 | 87.31 | 100.00 | A | A | A | A |
| 10 | 16 | 74 | 40.44 | 54.67 | 90.90 | 100.00 | A | A | A | A |
| 10 | 20 | 70 | 38.10 | 39.04 | 65.95 | 100.00 | A | A | A | B |
| 10 | 25 | 65 | 36.24 | 50.50 | 69.99 | 99.27 | A | A | A | B |
| 10 | 30 | 60 | 36.94 | 40.92 | 79.04 | 100.00 | A | A | A | C |
| 10 | 40 | 50 | 34.24 | 39.06 | 87.05 | 100.00 | A | B | B | B |
| 15 | 1 | 84 | 95.52 | 97.35 | 99.90 | 100.00 | A | A | A | A |
| 15 | 4 | 81 | 83.25 | 89.04 | 92.50 | 100.00 | A | A | A | A |
| 15 | 8 | 77 | 73.02 | 75.89 | 88.43 | 100.00 | A | A | A | A |
| 15 | 12 | 73 | 60.34 | 74.29 | 95.67 | 100.00 | A | A | A | A |
| 15 | 16 | 69 | 48.93 | 67.39 | 88.39 | 98.40 | A | A | A | A |
| 15 | 20 | 65 | 44.76 | 56.43 | 68.09 | 98.95 | A | A | A | A |
| 15 | 25 | 60 | 42.33 | 44.46 | 79.66 | 100.00 | A | A | A | A |
| 15 | 30 | 55 | 37.23 | 43.48 | 67.98 | 95.83 | A | A | A | B |
| 15 | 40 | 45 | 29.55 | 35.94 | 56.99 | 96.34 | A | B | B | C |
| 20 | 1 | 79 | 97.54 | 97.60 | 99.20 | 100.00 | A | A | A | A |
| 20 | 4 | 76 | 85.33 | 87.50 | 94.35 | 100.00 | A | A | A | A |
| 20 | 8 | 72 | 77.48 | 84.34 | 96.34 | 100.00 | A | A | A | A |
| 20 | 12 | 68 | 68.10 | 72.49 | 89.45 | 100.00 | A | A | A | A |
| 20 | 16 | 64 | 57.99 | 66.30 | 88.49 | 100.00 | A | A | A | A |
| 20 | 20 | 60 | 55.42 | 60.49 | 75.94 | 100.00 | A | A | A | A |
| 20 | 25 | 55 | 53.38 | 63.23 | 72.59 | 99.94 | A | A | A | A |
| 20 | 30 | 50 | 49.66 | 53.59 | 69.01 | 100.00 | A | A | A | A |
| 20 | 40 | 40 | 39.41 | 49.45 | 70.36 | 99.86 | A | A | B | B |
| 25 | 1 | 74 | 97.53 | 99.44 | 100.00 | 100.00 | A | A | A | A |
| 25 | 4 | 71 | 88.91 | 90.45 | 95.85 | 100.00 | A | A | A | A |
| 25 | 8 | 67 | 80.44 | 83.59 | 96.24 | 100.00 | A | A | A | A |
| 25 | 12 | 63 | 70.34 | 77.34 | 89.50 | 100.00 | A | A | A | A |
| 25 | 16 | 59 | 68.40 | 74.39 | 88.15 | 100.00 | A | A | A | A |
| 25 | 20 | 55 | 64.64 | 71.05 | 91.40 | 99.70 | A | A | A | A |
| 25 | 25 | 50 | 59.16 | 64.33 | 80.43 | 100.00 | A | A | A | A |
| 25 | 30 | 45 | 49.20 | 50.33 | 76.33 | 100.00 | A | A | B | B |

**Table 5. Results of composition, particle size distribution and stability test of beverages containing inactivated Kluyveromyces cells in Example 3**

| Proportion | | | Particle size distribution (Frequency%) | | | | Stability Test | | | |
|---|---|---|---|---|---|---|---|---|---|---|
| Dry po wd er % | Ra pes eed oil % | Wat er% | ≤5µm | ≤10µm | ≤50µm | ≤100µm | De mul sifi cati on of 7 day s | De mul sifi cati on of 14 day s | De mul sifi cati on of 21 day s | De mul sifi cati on of 28 day s |
| 2.5 | 1 | 96.5 | 87.54 | 92.64 | 99.05 | 100.00 | A | A | A | A |
| 2.5 | 4 | 93.5 | 62.35 | 69.41 | 86.71 | 99.96 | A | A | A | A |
| 2.5 | 8 | 89.5 | 48.88 | 57.78 | 74.75 | 100.00 | A | A | A | B |
| 2.5 | 12 | 85.5 | 41.02 | 58.93 | 79.74 | 100.00 | A | A | B | B |
| 2.5 | 16 | 81.5 | 38.75 | 46.92 | 62.92 | 100.00 | A | A | B | C |
| 2.5 | 20 | 77.5 | 12.91 | 14.24 | 69.75 | 98.00 | A | B | C | C |
| 2.5 | 25 | 72.5 | 9.84 | 12.08 | 59.76 | 99.99 | A | B | B | C |
| 2.5 | 30 | 67.5 | 14.78 | 37.88 | 56.77 | 97.33 | A | B | C | C |
| 2.5 | 40 | 57.5 | 6.84 | 9.45 | 43.96 | 97.42 | A | C | C | C |
| 5 | 1 | 94 | 85.76 | 99.60 | 99.98 | 100.00 | A | A | A | A |
| 5 | 4 | 91 | 60.65 | 69.34 | 80.17 | 100.00 | A | A | A | A |
| 5 | 8 | 87 | 42.54 | 75.11 | 86.35 | 99.58 | A | A | A | A |
| 5 | 12 | 83 | 36.86 | 51.34 | 70.45 | 100.00 | A | A | A | B |
| 5 | 16 | 79 | 27.73 | 39.56 | 74.65 | 100.00 | A | A | A | B |
| 5 | 20 | 75 | 25.66 | 48.89 | 68.79 | 100.00 | A | A | B | C |
| 5 | 25 | 70 | 25.77 | 60.46 | 73.68 | 99.04 | A | A | B | C |
| 5 | 30 | 65 | 16.67 | 38.67 | 60.43 | 100.00 | A | A | B | C |
| 5 | 40 | 55 | 14.78 | 35.25 | 53.56 | 100.00 | A | B | B | C |
| 10 | 1 | 89 | 96.74 | 96.94 | 99.49 | 100.00 | A | A | A | A |
| 10 | 4 | 86 | 79.36 | 97.63 | 98.76 | 100.00 | A | A | A | A |
| 10 | 8 | 82 | 56.66 | 66.78 | 73.54 | 98.34 | A | A | A | A |
| 10 | 12 | 78 | 48.45 | 69.36 | 83.42 | 100.00 | A | A | A | A |
| 10 | 16 | 74 | 41.54 | 56.75 | 96.73 | 100.00 | A | A | A | A |
| 10 | 20 | 70 | 35.55 | 48.05 | 68.66 | 99.99 | A | A | A | B |
| 10 | 25 | 65 | 35.26 | 55.22 | 70.69 | 100.00 | A | A | A | B |
| 10 | 30 | 60 | 26.65 | 55.35 | 87.44 | 100.00 | A | A | A | C |
| 10 | 40 | 50 | 35.55 | 45.69 | 86.44 | 100.00 | A | B | B | B |
| 15 | 1 | 84 | 96.44 | 99.36 | 99.96 | 100.00 | A | A | A | A |
| 15 | 4 | 81 | 82.33 | 90.09 | 97.50 | 100.00 | A | A | A | A |
| 15 | 8 | 77 | 69.66 | 79.66 | 88.84 | 100.00 | A | A | A | A |
| 15 | 12 | 73 | 58.59 | 69.73 | 98.94 | 100.00 | A | A | A | A |
| 15 | 16 | 69 | 49.91 | 66.63 | 85.52 | 100.00 | A | A | A | A |
| 15 | 20 | 65 | 47.36 | 52.56 | 69.36 | 100.00 | A | A | A | A |
| 15 | 25 | 60 | 40.52 | 59.29 | 85.62 | 100.00 | A | A | A | A |
| 15 | 30 | 55 | 35.45 | 53.38 | 79.98 | 99.34 | A | A | A | B |
| 15 | 40 | 45 | 27.55 | 47.42 | 66.79 | 100.00 | A | B | B | C |
| 20 | 1 | 79 | 96.48 | 98.52 | 99.83 | 100.00 | A | A | A | A |
| 20 | 4 | 76 | 86.31 | 89.40 | 99.12 | 100.00 | A | A | A | A |
| 20 | 8 | 72 | 76.24 | 84.18 | 89.52 | 100.00 | A | A | A | A |
| 20 | 12 | 68 | 67.32 | 73.44 | 90.51 | 100.00 | A | A | A | A |
| 20 | 16 | 64 | 58.23 | 63.34 | 83.41 | 100.00 | A | A | A | A |
| 20 | 20 | 60 | 58.32 | 70.49 | 80.21 | 100.00 | A | A | A | A |
| 20 | 25 | 55 | 52.58 | 68.32 | 83.53 | 100.00 | A | A | A | A |
| 20 | 30 | 50 | 48.21 | 58.52 | 73.51 | 98.53 | A | A | A | A |
| 20 | 40 | 40 | 38.36 | 63.56 | 80.31 | 100.00 | A | A | B | B |
| 25 | 1 | 74 | 96.63 | 99.98 | 100.00 | 100.00 | A | A | A | A |
| 25 | 4 | 71 | 87.99 | 93.41 | 96.36 | 100.00 | A | A | A | A |
| 25 | 8 | 67 | 84.35 | 85.33 | 99.20 | 100.00 | A | A | A | A |
| 25 | 12 | 63 | 74.44 | 80.32 | 91.41 | 100.00 | A | A | A | A |
| 25 | 16 | 59 | 69.14 | 73.59 | 90.51 | 99.98 | A | A | A | A |
| 25 | 20 | 55 | 65.13 | 70.44 | 85.43 | 100.00 | A | A | A | A |
| 25 | 25 | 50 | 52.47 | 73.16 | 90.52 | 100.00 | A | A | A | A |
| 25 | 30 | 45 | 48.35 | 59.26 | 79.65 | 100.00 | A | A | B | B |

**Table 6. Results of composition, particle size distribution and stability test of beverages containing inactivated Kluyveromyces cells in Example 4**

| Proportion | | | Particle size distribution (Frequency%) | | | | Stability Test | | | |
|---|---|---|---|---|---|---|---|---|---|---|
| Dry po wd er % | Ra pes ee d oil % | Water % | ≤5µm | ≤10µm | ≤50µm | ≤100µm | De mul sifi cati on of 7 day s | De mul sifi cati on of 14 day s | De mul sifi cati on of 21 day s | De mul sifi cati on of 28 day s |
| 2.5 | 1 | 96.5 | 90.55 | 95.24 | 99.81 | 100.00 | A | A | A | A |
| 2.5 | 4 | 93.5 | 62.41 | 69.36 | 88.44 | 100.00 | A | A | A | A |
| 2.5 | 8 | 89.5 | 44.52 | 56.44 | 79.36 | 100.00 | A | A | A | B |
| 2.5 | 12 | 85.5 | 33.06 | 46.31 | 89.31 | 100.00 | A | A | B | B |
| 2.5 | 16 | 81.5 | 28.33 | 47.33 | 69.23 | 93.94 | A | A | B | C |
| 2.5 | 20 | 77.5 | 13.31 | 25.32 | 70.13 | 100.00 | A | B | B | C |
| 2.5 | 25 | 72.5 | 10.96 | 21.47 | 44.63 | 100.00 | A | B | C | C |
| 2.5 | 30 | 67.5 | 9.99 | 18.24 | 57.15 | 98.12 | A | B | C | C |
| 2.5 | 40 | 57.5 | 6.31 | 14.23 | 68.4 | 94.84 | A | C | C | C |
| 5 | 1 | 94 | 87.15 | 90.05 | 96.84 | 100.00 | A | A | A | A |
| 5 | 4 | 91 | 65.23 | 79.44 | 96.40 | 100.00 | A | A | A | A |
| 5 | 8 | 87 | 42.03 | 54.28 | 70.32 | 100.00 | A | A | A | A |
| 5 | 12 | 83 | 33.23 | 49.27 | 79.23 | 100.00 | A | A | A | B |
| 5 | 16 | 79 | 28.34 | 38.44 | 59.52 | 99.74 | A | A | A | B |
| 5 | 20 | 75 | 24.27 | 39.53 | 78.42 | 100.00 | A | A | B | C |
| 5 | 25 | 70 | 23.43 | 55.43 | 78.10 | 100.00 | A | A | B | C |
| 5 | 30 | 65 | 16.70 | 53.28 | 80.48 | 100.00 | A | A | B | C |
| 5 | 40 | 55 | 12.34 | 34.30 | 82.42 | 100.00 | A | B | B | C |
| 10 | 1 | 89 | 97.64 | 97.94 | 99.99 | 100.00 | A | A | A | A |
| 10 | 4 | 86 | 78.96 | 86.43 | 95.34 | 100.00 | A | A | A | A |
| 10 | 8 | 82 | 57.32 | 65.62 | 90.44 | 100.00 | A | A | A | A |
| 10 | 12 | 78 | 50.29 | 59.31 | 79.41 | 100.00 | A | A | A | A |
| 10 | 16 | 74 | 42.41 | 59.41 | 96.42 | 100.00 | A | A | A | A |
| 10 | 20 | 70 | 35.36 | 49.36 | 69.25 | 100.00 | A | A | A | B |
| 10 | 25 | 65 | 30.32 | 47.38 | 80.35 | 99.34 | A | A | A | B |
| 10 | 30 | 60 | 28.57 | 49.24 | 89.42 | 100.00 | A | A | A | C |
| 10 | 40 | 50 | 24.34 | 43.47 | 85.45 | 100.00 | A | B | B | B |
| 15 | 1 | 84 | 94.23 | 98.12 | 100.00 | 100.00 | A | A | A | A |
| 15 | 4 | 81 | 81.45 | 89.25 | 96.31 | 100.00 | A | A | A | A |
| 15 | 8 | 77 | 70.35 | 85.31 | 95.31 | 100.00 | A | A | A | A |
| 15 | 12 | 73 | 60.41 | 78.22 | 96.63 | 100.00 | A | A | A | A |
| 15 | 16 | 69 | 52.31 | 70.31 | 95.13 | 100.00 | A | A | A | A |
| 15 | 20 | 65 | 50.46 | 66.23 | 89.23 | 100.00 | A | A | A | A |
| 15 | 25 | 60 | 40.24 | 54.34 | 76.33 | 100.00 | A | A | A | A |
| 15 | 30 | 55 | 36.86 | 43.35 | 77.47 | 100.00 | A | A | A | B |
| 15 | 40 | 45 | 28.31 | 48.42 | 63.95 | 99.14 | A | B | B | C |
| 20 | 1 | 79 | 98.31 | 99.60 | 99.98 | 100.00 | A | A | A | A |
| 20 | 4 | 76 | 87.28 | 90.27 | 98.32 | 100.00 | A | A | A | A |
| 20 | 8 | 72 | 74.52 | 89.12 | 95.09 | 100.00 | A | A | A | A |
| 20 | 12 | 68 | 65.31 | 76.10 | 84.96 | 100.00 | A | A | A | A |
| 20 | 16 | 64 | 58.10 | 70.47 | 80.47 | 100.00 | A | A | A | A |
| 20 | 20 | 60 | 56.51 | 69.32 | 85.41 | 100.00 | A | A | A | A |
| 20 | 25 | 55 | 49.34 | 86.23 | 99.59 | 100.00 | A | A | A | A |
| 20 | 30 | 50 | 47.32 | 67.13 | 80.35 | 100.00 | A | A | A | A |
| 20 | 40 | 40 | 37.32 | 57.31 | 81.48 | 100.00 | A | A | B | B |
| 25 | 1 | 74 | 98.99 | 99.10 | 100.00 | 100.00 | A | A | A | A |
| 25 | 4 | 71 | 90.19 | 93.74 | 98.73 | 100.00 | A | A | A | A |
| 25 | 8 | 67 | 79.94 | 87.31 | 95.33 | 100.00 | A | A | A | A |
| 25 | 12 | 63 | 69.94 | 75.89 | 81.85 | 100.00 | A | A | A | A |
| 25 | 16 | 59 | 63.96 | 73.69 | 96.73 | 100.00 | A | A | A | A |
| 25 | 20 | 55 | 69.75 | 78.51 | 89.30 | 100.00 | A | A | A | A |
| 25 | 25 | 50 | 52.95 | 62.85 | 83.94 | 100.00 | A | A | A | A |
| 25 | 30 | 45 | 49.84 | 65.31 | 85.32 | 100.00 | A | A | B | B |

**Table 7. Results of composition, particle size distribution and stability test of beverages containing inactivated Kluyveromyces cells in Example 5**

| Proportion | | | Particle size distribution (Frequency%) | | | | Stability Test | | | |
|---|---|---|---|---|---|---|---|---|---|---|
| Dry po wd er % | Ra pes eed oil % | Wat er% | ≤5µm | ≤10µm | ≤50µm | ≤100µm | De mul sifi cati on of 7 day s | De mul sifi cati on of 14 day s | De mul sifi cati on of 21 day s | De mul sifi cati on of 28 day s |
| 2.5 | 1 | 96.5 | 94.35 | 95.35 | 100.00 | 100.00 | A | A | A | A |
| 2.5 | 4 | 93.5 | 62.11 | 66.34 | 84.32 | 100.00 | A | A | A | A |
| 2.5 | 8 | 89.5 | 26.63 | 29.93 | 86.34 | 100.00 | A | A | A | B |
| 2.5 | 12 | 85.5 | 24.76 | 36.32 | 58.32 | 100.00 | A | A | B | B |
| 2.5 | 16 | 81.5 | 18.46 | 37.86 | 69.41 | 100.00 | A | A | B | C |
| 2.5 | 20 | 77.5 | 12.83 | 35.85 | 57.34 | 98.34 | A | B | B | C |
| 2.5 | 25 | 72.5 | 11.94 | 22.87 | 79.65 | 100.00 | A | B | B | C |
| 2.5 | 30 | 67.5 | 8.14 | 28.58 | 60.14 | 100.00 | A | B | C | C |
| 2.5 | 40 | 57.5 | 7.94 | 15.32 | 63.43 | 100.00 | A | B | C | C |
| 5 | 1 | 94 | 86.32 | 91.41 | 99.89 | 100.00 | A | A | A | A |
| 5 | 4 | 91 | 60.32 | 78.72 | 95.56 | 100.00 | A | A | A | A |
| 5 | 8 | 87 | 41.33 | 64.34 | 77.34 | 100.00 | A | A | A | A |
| 5 | 12 | 83 | 31.94 | 53.72 | 80.24 | 100.00 | A | A | A | B |
| 5 | 16 | 79 | 24.41 | 49.52 | 69.42 | 100.00 | A | A | A | B |
| 5 | 20 | 75 | 23.35 | 40.12 | 68.52 | 100.00 | A | A | B | C |
| 5 | 25 | 70 | 20.35 | 60.42 | 83.88 | 100.00 | A | A | B | C |
| 5 | 30 | 65 | 15.84 | 56.42 | 79.42 | 100.00 | A | A | B | C |
| 5 | 40 | 55 | 12.94 | 39.31 | 59.43 | 97.73 | A | B | B | C |
| 10 | 1 | 89 | 95.95 | 98.23 | 99.92 | 100.00 | A | A | A | A |
| 10 | 4 | 86 | 77.85 | 87.36 | 97.42 | 100.00 | A | A | A | A |
| 10 | 8 | 82 | 56.95 | 61.56 | 83.41 | 100.00 | A | A | A | A |
| 10 | 12 | 78 | 49.85 | 63.42 | 83.42 | 100.00 | A | A | A | A |
| 10 | 16 | 74 | 42.05 | 64.21 | 89.74 | 100.00 | A | A | A | A |
| 10 | 20 | 70 | 38.53 | 50.11 | 78.36 | 100.00 | A | A | A | B |
| 10 | 25 | 65 | 29.05 | 52.57 | 81.42 | 100.00 | A | A | A | B |
| 10 | 30 | 60 | 27.31 | 52.31 | 72.83 | 100.00 | A | A | A | C |
| 10 | 40 | 50 | 22.59 | 37.45 | 75.13 | 100.00 | A | B | B | B |
| 15 | 1 | 84 | 95.51 | 97.42 | 99.03 | 100.00 | A | A | A | A |
| 15 | 4 | 81 | 80.41 | 88.15 | 97.27 | 100.00 | A | A | A | A |
| 15 | 8 | 77 | 68.34 | 84.24 | 96.26 | 100.00 | A | A | A | A |
| 15 | 12 | 73 | 59.31 | 77.59 | 89.43 | 100.00 | A | A | A | A |
| 15 | 16 | 69 | 51.45 | 77.77 | 85.83 | 100.00 | A | A | A | A |
| 15 | 20 | 65 | 48.41 | 67.14 | 90.52 | 100.00 | A | A | A | A |
| 15 | 25 | 60 | 39.41 | 62.74 | 70.26 | 97.23 | A | A | A | A |
| 15 | 30 | 55 | 36.83 | 50.21 | 69.34 | 100.00 | A | A | A | B |
| 15 | 40 | 45 | 29.41 | 56.52 | 70.23 | 100.00 | A | B | B | C |
| 20 | 1 | 79 | 99.81 | 99.95 | 100.00 | 100.00 | A | A | A | A |
| 20 | 4 | 76 | 88.48 | 91.53 | 96.96 | 100.00 | A | A | A | A |
| 20 | 8 | 72 | 75.31 | 83.41 | 89.21 | 100.00 | A | A | A | A |
| 20 | 12 | 68 | 64.31 | 75.41 | 89.03 | 100.00 | A | A | A | A |
| 20 | 16 | 64 | 57.93 | 74.79 | 85.04 | 98.99 | A | A | A | A |
| 20 | 20 | 60 | 57.51 | 71.33 | 83.45 | 100.00 | A | A | A | A |
| 20 | 25 | 55 | 49.42 | 88.31 | 96.31 | 100.00 | A | A | A | A |
| 20 | 30 | 50 | 46.31 | 63.42 | 70.51 | 100.00 | A | A | A | A |
| 20 | 40 | 40 | 36.31 | 49.13 | 79.35 | 100.00 | A | A | B | B |
| 25 | 1 | 74 | 97.00 | 98.35 | 99.73 | 100.00 | A | A | A | A |
| 25 | 4 | 71 | 88.32 | 91.41 | 99.04 | 100.00 | A | A | A | A |
| 25 | 8 | 67 | 80.95 | 85.15 | 98.24 | 100.00 | A | A | A | A |
| 25 | 12 | 63 | 70.42 | 76.42 | 87.21 | 100.00 | A | A | A | A |
| 25 | 16 | 59 | 61.42 | 77.31 | 90.45 | 100.00 | A | A | A | A |
| 25 | 20 | 55 | 68.12 | 76.31 | 90.41 | 100.00 | A | A | A | A |
| 25 | 25 | 50 | 55.92 | 70.42 | 79.23 | 99.92 | A | A | A | A |
| 25 | 30 | 45 | 46.52 | 73.47 | 89.23 | 100.00 | A | A | B | B |

**Table 8. Results of composition, particle size distribution and stability test of beverages containing inactivated Kluyveromyces cells in Example 6**

| Proportion | | | Particle size distribution (Frequency%) | | | | Stability Test | | | |
|---|---|---|---|---|---|---|---|---|---|---|
| Dry powd er% | Rape seed oil% | Water % | ≤5µm | ≤10µ m | ≤50µ m | ≤100µ m | Demu Isificat ion of 7 days | Demu Isificat ion of 14 days | Demu Isificat ion of 21 days | Demu Isificat ion of 28 days |
| 2.5 | 1 | 96.5 | 93.84 | 94.41 | 99.80 | 100.00 | A | A | A | A |
| 2.5 | 4 | 93.5 | 44.31 | 56.31 | 74.52 | 100.00 | A | A | A | A |
| 2.5 | 8 | 89.5 | 24.31 | 31.67 | 67.34 | 100.00 | A | A | A | B |
| 2.5 | 12 | 85.5 | 23.41 | 36.15 | 59.63 | 93.64 | A | A | B | B |
| 2.5 | 16 | 81.5 | 19.31 | 39.43 | 75.42 | 100.00 | A | A | B | C |
| 2.5 | 20 | 77.5 | 13.21 | 26.34 | 67.34 | 100.00 | A | B | B | C |
| 2.5 | 25 | 72.5 | 12.64 | 38.83 | 60.65 | 100.00 | A | B | B | C |
| 2.5 | 30 | 67.5 | 8.54 | 20.68 | 57.41 | 100.00 | A | B | B | C |
| 2.5 | 40 | 57.5 | 6.44 | 13.42 | 44.46 | 100.00 | A | C | C | C |
| 5 | 1 | 94 | 84.42 | 90.90 1 | 95.42 | 100.00 | A | A | A | A |
| 5 | 4 | 91 | 58.31 | 68.41 | 87.42 | 100.00 | A | A | A | A |
| 5 | 8 | 87 | 40.12 | 56.32 | 78.13 | 100.00 | A | A | A | A |
| 5 | 12 | 83 | 31.31 | 47.13 | 67.15 | 100.00 | A | A | A | B |
| 5 | 16 | 79 | 23.31 | 36.43 | 68.13 | 100.00 | A | A | A | B |
| 5 | 20 | 75 | 27.31 | 53.46 | 70.24 | 100.00 | A | A | B | C |
| 5 | 25 | 70 | 19.42 | 54.97 | 67.08 | 99.60 | A | A | B | C |
| 5 | 30 | 65 | 16.12 | 48.57 | 63.17 | 100.00 | A | A | B | C |
| 5 | 40 | 55 | 13.73 | 36.11 | 74.39 | 100.00 | A | B | B | C |
| 10 | 1 | 89 | 92.12 | 95.22 | 100.0 0 | 100.00 | A | A | A | A |
| 10 | 4 | 86 | 76.31 | 79.53 | 82.61 | 100.00 | A | A | A | A |
| 10 | 8 | 82 | 58.04 | 67.36 | 79.54 | 100.00 | A | A | A | A |
| 10 | 12 | 78 | 47.34 | 66.60 | 85.42 | 100.00 | A | A | A | A |
| 10 | 16 | 74 | 40.31 | 60.41 | 80.42 | 100.00 | A | A | A | A |
| 10 | 20 | 70 | 36.10 | 55.96 | 80.59 | 100.00 | A | A | A | B |
| 10 | 25 | 65 | 29.31 | 50.50 | 67.00 | 100.00 | A | A | A | B |
| 10 | 30 | 60 | 28.45 | 49.00 | 78.44 | 100.00 | A | A | A | C |
| 10 | 40 | 50 | 23.45 | 39.35 | 74.29 | 100.00 | A | B | B | B |
| 15 | 1 | 84 | 96.34 | 98.65 | 100.0 0 | 100.00 | A | A | A | A |
| 15 | 4 | 81 | 83.21 | 89.86 | 99.52 | 100.00 | A | A | A | A |
| 15 | 8 | 77 | 70.42 | 79.59 | 86.35 | 100.00 | A | A | A | A |
| 15 | 12 | 73 | 56.74 | 73.68 | 87.77 | 100.00 | A | A | A | A |
| 15 | 16 | 69 | 57.74 | 69.73 | 84.64 | 100.00 | A | A | A | A |
| 15 | 20 | 65 | 48.42 | 65.22 | 78.35 | 100.00 | A | A | A | A |
| 15 | 25 | 60 | 41.80 | 69.25 | 85.23 | 100.00 | A | A | A | A |
| 15 | 30 | 55 | 38.32 | 54.17 | 79.47 | 100.00 | A | A | A | B |
| 15 | 40 | 45 | 28.86 | 59.11 | 86.55 | 100.00 | A | B | B | C |
| 20 | 1 | 79 | 97.63 | 99.95 | 100.0 0 | 100.00 | A | A | A | A |
| 20 | 4 | 76 | 87.05 | 91.53 | 96.96 | 100.00 | A | A | A | A |
| 20 | 8 | 72 | 74.96 | 83.41 | 89.21 | 100.00 | A | A | A | A |
| 20 | 12 | 68 | 66.13 | 75.41 | 89.03 | 100.00 | A | A | A | A |
| 20 | 16 | 64 | 53.53 | 74.79 | 85.04 | 100.00 | A | A | A | A |
| 20 | 20 | 60 | 53.96 | 71.33 | 83.45 | 100.00 | A | A | A | A |
| 20 | 25 | 55 | 48.34 | 88.31 | 96.31 | 100.00 | A | A | A | A |
| 20 | 30 | 50 | 45.31 | 63.42 | 70.51 | 100.00 | A | A | A | A |
| 20 | 40 | 40 | 39.57 | 49.13 | 79.35 | 100.00 | A | A | B | B |
| 25 | 1 | 74 | 96.10 | 98.35 | 99.73 | 100.00 | A | A | A | A |
| 25 | 4 | 71 | 87.95 | 91.41 | 99.04 | 100.00 | A | A | A | A |
| 25 | 8 | 67 | 79.34 | 85.15 | 98.24 | 100.00 | A | A | A | A |
| 25 | 12 | 63 | 69.93 | 76.42 | 87.21 | 100.00 | A | A | A | A |
| 25 | 16 | 59 | 65.23 | 77.31 | 90.45 | 100.00 | A | A | A | A |
| 25 | 20 | 55 | 59.85 | 76.31 | 90.41 | 100.00 | A | A | A | A |
| 25 | 25 | 50 | 57.42 | 70.42 | 79.23 | 100.00 | A | A | A | A |
| 25 | 30 | 45 | 48.53 | 73.47 | 89.23 | 100.00 | A | A | B | B |

As shown in Table 4-Table 8, after shear emulsifying process until the particle sizes of each component in the suspension are all less than or equal to 100µm (the frequency of particle size≤100mµm is 100%), all can maintain a stable and uniform status without stratification for 7 days at room temperature when the proportion of inactivated *Kluyveromyces* cell powder is 2.5-25%, the proportion of edible oil is 1%-40%, and the proportion of water is 40%-96.5%; it can even maintain a stable and uniform status without stratification for 28 days when the proportion of inactivated *Kluyveromyces* cell powder is 2.5-25%, the proportion of edible oil is 1%-30%, the proportion of water is 40%-96.5% and the particle size of each component in the suspension is less than or equal to 100µm by the same shearing.

### Example 10. Preparation of Sauces Containing Inactivated Kluyveromyces cells and Rapeseed Oil

Sauce of food with required particle size distribution was prepared by emulsification in a certain weight percentage of inactivated *Kluyveromyces* cell dry powder prepared in Example 2-6, rapeseed oil, and water. The specific steps are as follows:
(1) Mixing the *Kluyveromyces* cell dry powder with water and stirred until evenly diffused;
(2) Starting to shear emulsifying by using emulsifying machine. Adding rapeseed oil slowly during the shearing process to keep the emulsification. Sampling every 2 minutes and detecting the particle size distribution of the sample by laser particle size analyzer, further emulsifying until the required particle size distribution to stop and obtain sauce of food composition containing inactivated *Kluyveromyces* cells. Observing the stability of the product at 25°C.

The results of the percentage content by weight of inactivated *Kluyveromyces* cell dry powder, rapeseed oil and water, the particle size distribution of composition, and the results of stability test are shown in Table 9, Table 10, Table 11, Table 12, and Table 13 (A is defined as no demulsification and no stratification at all; B is defined as slight demulsification and a little amount of stratification at the top of the product; C is defined as obvious demulsification and a complete oil and water stratification of product):

**Table 9. Results of composition, particle size distribution and stability test of sauces containing inactivated Kluyveromyces cells in Example 2**

| Proportion | | | Particle size distribution (Frequency%) | | | | Stability Test | | | |
|---|---|---|---|---|---|---|---|---|---|---|
| Dry po wd er % | Ra pes eed oil % | Wa ter % | ≤5µm | ≤10µm | ≤50µm | ≤100µm | De mul sifi cati on of 7 day s | De mul sifi cati on of 14 day s | De mul sifi cati on of 21 day s | De mul sifi cati on of 28 day s |
| 30 | 1 | 69 | 98.05 | 98.09 | 99.94 | 100.00 | A | A | A | A |
| 30 | 4 | 66 | 88.73 | 90.52 | 93.56 | 100.00 | A | A | A | A |
| 30 | 8 | 62 | 79.31 | 83.59 | 94.29 | 100.00 | A | A | A | A |
| 30 | 12 | 58 | 72.90 | 77.41 | 89.02 | 99.32 | A | A | A | A |
| 30 | 16 | 54 | 66.35 | 73.68 | 85.13 | 100.00 | A | A | A | A |
| 30 | 20 | 50 | 60.95 | 70.33 | 89.99 | 100.00 | A | A | A | A |
| 30 | 25 | 45 | 54.75 | 60.36 | 79.83 | 100.00 | A | A | A | A |
| 30 | 30 | 40 | 51.35 | 60.66 | 77.45 | 100.00 | A | A | A | A |
| 35 | 1 | 64 | 98.58 | 99.31 | 100.00 | 100.00 | A | A | A | A |
| 35 | 4 | 61 | 89.75 | 90.45 | 94.44 | 100.00 | A | A | A | A |
| 35 | 8 | 57 | 81.82 | 84.63 | 96.43 | 100.00 | A | A | A | A |
| 35 | 12 | 53 | 75.48 | 85.22 | 97.33 | 100.00 | A | A | A | A |
| 35 | 16 | 49 | 69.12 | 75.34 | 87.33 | 100.00 | A | A | A | A |
| 35 | 20 | 45 | 65.48 | 70.44 | 85.19 | 100.00 | A | A | A | A |
| 35 | 25 | 40 | 60.59 | 69.34 | 82.59 | 100.00 | A | A | A | A |
| 35 | 30 | 35 | 54.00 | 56.42 | 70.19 | 97.31 | A | A | A | A |
| 40 | 1 | 59 | 99.46 | 100.00 | 100.00 | 100.00 | A | A | A | A |
| 40 | 4 | 56 | 91.86 | 97.33 | 100.00 | 100.00 | A | A | A | A |
| 40 | 8 | 52 | 85.53 | 94.20 | 99.43 | 100.00 | A | A | A | A |
| 40 | 12 | 48 | 76.98 | 83.62 | 96.22 | 100.00 | A | A | A | A |
| 40 | 16 | 44 | 72.21 | 80.31 | 89.32 | 100.00 | A | A | A | A |
| 40 | 20 | 40 | 68.26 | 74.21 | 84.01 | 100.00 | A | A | A | A |
| 40 | 25 | 35 | 61.62 | 83.33 | 100.00 | 100.00 | A | A | A | A |
| 40 | 30 | 30 | 57.84 | 64.13 | 85.14 | 100.00 | A | A | A | A |
| 45 | 1 | 54 | 98.01 | 99.99 | 100.00 | 100.00 | A | A | A | A |
| 45 | 4 | 51 | 92.22 | 94.11 | 95.22 | 100.00 | A | A | A | A |
| 45 | 8 | 47 | 85.89 | 90.34 | 98.33 | 100.00 | A | A | A | A |
| 45 | 12 | 43 | 81.21 | 86.22 | 100.00 | 100.00 | A | A | A | A |
| 45 | 16 | 39 | 75.14 | 80.23 | 94.13 | 100.00 | A | A | A | A |
| 45 | 20 | 35 | 70.39 | 70.59 | 85.29 | 100.00 | A | A | A | A |
| 45 | 25 | 30 | 66.38 | 72.50 | 84.22 | 100.00 | A | A | A | A |
| 50 | 1 | 49 | 99.27 | 100.00 | 100.00 | 100.00 | A | A | A | A |
| 50 | 4 | 46 | 93.52 | 100.00 | 100.00 | 100.00 | A | A | A | A |
| 50 | 8 | 42 | 88.33 | 97.24 | 100.00 | 100.00 | A | A | A | A |
| 50 | 12 | 38 | 82.77 | 90.47 | 99.41 | 100.00 | A | A | A | A |
| 50 | 16 | 34 | 76.92 | 80.57 | 89.34 | 100.00 | A | A | A | A |
| 50 | 20 | 30 | 73.81 | 80.35 | 86.58 | 100.00 | A | A | A | A |
| 50 | 25 | 25 | 67.07 | 70.33 | 84.44 | 100.00 | A | A | A | A |
| 55 | 1 | 44 | 99.74 | 100.00 | 100.00 | 100.00 | A | A | A | A |
| 55 | 4 | 41 | 94.05 | 99.05 | 100.00 | 100.00 | A | A | A | A |
| 55 | 8 | 37 | 88.63 | 90.77 | 98.57 | 100.00 | A | A | A | A |
| 55 | 12 | 33 | 82.30 | 89.47 | 98.35 | 100.00 | A | A | A | A |
| 55 | 16 | 29 | 77.64 | 85.66 | 90.63 | 100.00 | A | A | A | A |
| 55 | 20 | 25 | 74.54 | 84.47 | 99.56 | 100.00 | A | A | A | A |
| 60 | 1 | 39 | 99.10 | 100.00 | 100.00 | 100.00 | A | A | A | A |
| 60 | 4 | 36 | 95.38 | 98.44 | 99.40 | 100.00 | A | A | A | A |
| 60 | 8 | 32 | 90.47 | 95.24 | 99.04 | 100.00 | A | A | A | A |
| 60 | 12 | 28 | 85.81 | 90.42 | 98.24 | 100.00 | A | A | A | A |
| 60 | 16 | 24 | 80.39 | 86.24 | 95.78 | 100.00 | A | A | A | A |
| 60 | 20 | 20 | 75.30 | 80.52 | 93.50 | 100.00 | A | A | A | B |
| 65 | 1 | 34 | 99.27 | 100.00 | 100.00 | 100.00 | A | A | A | A |
| 65 | 4 | 31 | 94.70 | 99.34 | 100.00 | 100.00 | A | A | A | A |
| 65 | 8 | 27 | 90.55 | 95.24 | 99.45 | 100.00 | A | A | A | A |
| 65 | 12 | 23 | 86.36 | 90.00 | 97.10 | 100.00 | A | A | A | A |
| 65 | 16 | 19 | 81.03 | 89.43 | 96.24 | 100.00 | A | A | A | A |
| 70 | 1 | 29 | 99.70 | 100.00 | 100.00 | 100.00 | A | A | A | A |
| 70 | 4 | 26 | 95.51 | 99.80 | 100.00 | 100.00 | A | A | A | A |
| 70 | 8 | 22 | 90.92 | 98.41 | 100.00 | 100.00 | A | A | A | A |
| 70 | 12 | 18 | 85.62 | 90.42 | 100.00 | 100.00 | A | A | A | A |

**Table 10. Results of composition, particle size distribution and stability test of sauces containing inactivated Kluyveromyces cells in Example 3**

| Proportion | | | Particle size distribution (Frequency%) | | | | Stability Test | | | |
|---|---|---|---|---|---|---|---|---|---|---|
| Dry po wd er % | Ra pes eed oil % | Wa ter % | ≤5µm | ≤10µm | ≤50µm | ≤100µm | De mul sifi cati on of 7 day s | De mul sifi cati on of 14 day s | De mul sifi cati on of 21 day s | De mul sifi cati on of 28 day s |
| 30 | 1 | 69 | 98.44 | 99.02 | 100.00 | 100.00 | A | A | A | A |
| 30 | 4 | 66 | 89.02 | 93.21 | 99.42 | 100.00 | A | A | A | A |
| 30 | 8 | 62 | 79.58 | 84.13 | 91.34 | 100.00 | A | A | A | A |
| 30 | 12 | 58 | 72.54 | 81.41 | 89.23 | 100.00 | A | A | A | A |
| 30 | 16 | 54 | 66.30 | 72.50 | 85.33 | 100.00 | A | A | A | A |
| 30 | 20 | 50 | 60.82 | 63.13 | 75.89 | 97.88 | A | A | A | A |
| 30 | 25 | 45 | 54.92 | 60.38 | 77.49 | 100.00 | A | A | A | A |
| 30 | 30 | 40 | 51.38 | 57.39 | 87.23 | 100.00 | A | A | A | A |
| 35 | 1 | 64 | 97.91 | 100.00 | 100.00 | 100.00 | A | A | A | A |
| 35 | 4 | 61 | 91.08 | 99.84 | 100.00 | 100.00 | A | A | A | A |
| 35 | 8 | 57 | 83.85 | 91.49 | 98.44 | 100.00 | A | A | A | A |
| 35 | 12 | 53 | 75.35 | 80.42 | 88.49 | 100.00 | A | A | A | A |
| 35 | 16 | 49 | 68.89 | 74.20 | 80.45 | 99.94 | A | A | A | A |
| 35 | 20 | 45 | 63.87 | 67.67 | 76.96 | 100.00 | A | A | A | A |
| 35 | 25 | 40 | 60.33 | 69.04 | 80.66 | 100.00 | A | A | A | A |
| 35 | 30 | 35 | 54.22 | 67.34 | 90.44 | 100.00 | A | A | A | A |
| 40 | 1 | 59 | 98.10 | 100.00 | 100.00 | 100.00 | A | A | A | A |
| 40 | 4 | 56 | 93.35 | 98.42 | 100.00 | 100.00 | A | A | A | A |
| 40 | 8 | 52 | 83.63 | 90.09 | 99.82 | 100.00 | A | A | A | A |
| 40 | 12 | 48 | 78.14 | 86.66 | 97.55 | 100.00 | A | A | A | A |
| 40 | 16 | 44 | 72.11 | 80.44 | 91.57 | 100.00 | A | A | A | A |
| 40 | 20 | 40 | 68.60 | 79.55 | 85.33 | 100.00 | A | A | A | A |
| 40 | 25 | 35 | 63.57 | 70.36 | 89.25 | 100.00 | A | A | A | A |
| 40 | 30 | 30 | 57.41 | 64.89 | 80.99 | 100.00 | A | A | A | A |
| 45 | 1 | 54 | 99.89 | 100.00 | 100.00 | 100.00 | A | A | A | A |
| 45 | 4 | 51 | 93.34 | 99.52 | 100.00 | 100.00 | A | A | A | A |
| 45 | 8 | 47 | 87.09 | 94.31 | 99.34 | 100.00 | A | A | A | A |
| 45 | 12 | 43 | 79.34 | 83.11 | 94.22 | 100.00 | A | A | A | A |
| 45 | 16 | 39 | 75.19 | 83.09 | 90.58 | 100.00 | A | A | A | A |
| 45 | 20 | 35 | 71.24 | 78.34 | 87.13 | 100.00 | A | A | A | A |
| 45 | 25 | 30 | 64.98 | 75.22 | 86.05 | 100.00 | A | A | A | A |
| 50 | 1 | 49 | 98.33 | 100.00 | 100.00 | 100.00 | A | A | A | A |
| 50 | 4 | 46 | 93.91 | 98.31 | 100.00 | 100.00 | A | A | A | A |
| 50 | 8 | 42 | 88.54 | 94.27 | 99.04 | 100.00 | A | A | A | A |
| 50 | 12 | 38 | 81.72 | 89.42 | 97.32 | 100.00 | A | A | A | A |
| 50 | 16 | 34 | 77.23 | 84.20 | 93.20 | 100.00 | A | A | A | A |
| 50 | 20 | 30 | 72.63 | 82.41 | 94.44 | 100.00 | A | A | A | A |
| 50 | 25 | 25 | 68.71 | 75.13 | 89.34 | 99.09 | A | A | A | A |
| 55 | 1 | 44 | 98.35 | 95.10 | 100.00 | 100.00 | A | A | A | A |
| 55 | 4 | 41 | 94.06 | 98.64 | 100.00 | 100.00 | A | A | A | A |
| 55 | 8 | 37 | 87.99 | 96.69 | 100.00 | 100.00 | A | A | A | A |
| 55 | 12 | 33 | 82.43 | 89.46 | 98.55 | 100.00 | A | A | A | A |
| 55 | 16 | 29 | 78.34 | 87.36 | 90.36 | 100.00 | A | A | A | A |
| 55 | 20 | 25 | 74.06 | 84.24 | 96.10 | 100.00 | A | A | A | A |
| 60 | 1 | 39 | 98.45 | 100.00 | 100.00 | 100.00 | A | A | A | A |
| 60 | 4 | 36 | 93.75 | 96.24 | 99.99 | 100.00 | A | A | A | A |
| 60 | 8 | 32 | 89.25 | 94.23 | 100.00 | 100.00 | A | A | A | A |
| 60 | 12 | 28 | 84.79 | 90.47 | 98.46 | 100.00 | A | A | A | A |
| 60 | 16 | 24 | 81.21 | 92.85 | 98.46 | 100.00 | A | A | A | A |
| 60 | 20 | 20 | 75.74 | 80.47 | 98.57 | 100.00 | A | A | A | A |
| 65 | 1 | 34 | 98.57 | 100.00 | 100.00 | 100.00 | A | A | A | A |
| 65 | 4 | 31 | 95.33 | 98.04 | 99.99 | 100.00 | A | A | A | A |
| 65 | 8 | 27 | 90.50 | 100.00 | 100.00 | 100.00 | A | A | A | A |
| 65 | 12 | 23 | 85.20 | 92.49 | 98.24 | 100.00 | A | A | A | A |
| 65 | 16 | 19 | 80.87 | 86.90 | 98.46 | 100.00 | A | A | A | A |
| 70 | 1 | 29 | 99.17 | 100.00 | 100.00 | 100.00 | A | A | A | A |
| 70 | 4 | 26 | 95.35 | 99.94 | 100.00 | 100.00 | A | A | A | A |
| 70 | 8 | 22 | 92.20 | 95.24 | 98.35 | 100.00 | A | A | A | A |
| 70 | 12 | 18 | 85.94 | 90.24 | 99.52 | 100.00 | A | A | A | B |

**Table 11. Results of composition, particle size distribution and stability test of sauces containing inactivated Kluyveromyces cells in Example 4**

| Proportion | | | Particle size distribution (Frequency%) | | | | Stability Test | | | |
|---|---|---|---|---|---|---|---|---|---|---|
| Dry po wd er % | Ra pes eed oil % | Wa ter % | ≤5µm | ≤10µm | ≤50µm | ≤100µm | De mul sifi cati on of 7 day s | De mul sifi cati on of 14 day s | De mul sifi cati on of 21 day s | De mul sifi cati on of 28 day s |
| 30 | 1 | 69 | 97.98 | 100.00 | 100.00 | 100.00 | A | A | A | A |
| 30 | 4 | 66 | 90.08 | 99.45 | 100.00 | 100.00 | A | A | A | A |
| 30 | 8 | 62 | 80.13 | 89.13 | 97.24 | 100.00 | A | A | A | A |
| 30 | 12 | 58 | 73.20 | 84.34 | 89.46 | 100.00 | A | A | A | A |
| 30 | 16 | 54 | 67.55 | 74.74 | 89.57 | 100.00 | A | A | A | A |
| 30 | 20 | 50 | 62.28 | 74.24 | 90.46 | 100.00 | A | A | A | A |
| 30 | 25 | 45 | 55.57 | 67.48 | 86.31 | 100.00 | A | A | A | A |
| 30 | 30 | 40 | 51.72 | 83.67 | 90.88 | 100.00 | A | A | A | A |
| 35 | 1 | 64 | 97.89 | 100.00 | 100.00 | 100.00 | A | A | A | A |
| 35 | 4 | 61 | 91.22 | 100.00 | 100.00 | 100.00 | A | A | A | A |
| 35 | 8 | 57 | 81.71 | 93.48 | 98.44 | 100.00 | A | A | A | A |
| 35 | 12 | 53 | 76.67 | 89.33 | 94.33 | 100.00 | A | A | A | A |
| 35 | 16 | 49 | 69.47 | 89.42 | 96.24 | 100.00 | A | A | A | A |
| 35 | 20 | 45 | 64.99 | 76.22 | 89.43 | 100.00 | A | A | A | A |
| 35 | 25 | 40 | 58.88 | 73.10 | 89.35 | 100.00 | A | A | A | A |
| 35 | 30 | 35 | 55.29 | 62.59 | 85.22 | 100.00 | A | A | A | B |
| 40 | 1 | 59 | 98.07 | 100.00 | 100.00 | 100.00 | A | A | A | A |
| 40 | 4 | 56 | 91.37 | 99.34 | 100.00 | 100.00 | A | A | A | A |
| 40 | 8 | 52 | 83.65 | 95.24 | 98.44 | 100.00 | A | A | A | A |
| 40 | 12 | 48 | 77.16 | 92.59 | 99.58 | 100.00 | A | A | A | A |
| 40 | 16 | 44 | 73.39 | 80.34 | 91.49 | 100.00 | A | A | A | A |
| 40 | 20 | 40 | 69.14 | 83.15 | 96.24 | 100.00 | A | A | A | A |
| 40 | 25 | 35 | 62.65 | 79.31 | 95.95 | 100.00 | A | A | A | A |
| 40 | 30 | 30 | 58.29 | 73.55 | 86.01 | 98.32 | A | A | A | A |
| 45 | 1 | 54 | 99.42 | 100.00 | 100.00 | 100.00 | A | A | A | A |
| 45 | 4 | 51 | 93.83 | 99.10 | 100.00 | 100.00 | A | A | A | A |
| 45 | 8 | 47 | 85.94 | 92.51 | 96.24 | 100.00 | A | A | A | A |
| 45 | 12 | 43 | 80.77 | 86.24 | 96.24 | 100.00 | A | A | A | A |
| 45 | 16 | 39 | 74.80 | 80.35 | 96.13 | 100.00 | A | A | A | A |
| 45 | 20 | 35 | 69.28 | 79.34 | 90.53 | 100.00 | A | A | A | A |
| 45 | 25 | 30 | 64.90 | 70.24 | 95.24 | 100.00 | A | A | A | A |
| 50 | 1 | 49 | 99.33 | 100.00 | 100.00 | 100.00 | A | A | A | A |
| 50 | 4 | 46 | 92.71 | 97.24 | 100.00 | 100.00 | A | A | A | A |
| 50 | 8 | 42 | 86.70 | 90.31 | 97.24 | 100.00 | A | A | A | A |
| 50 | 12 | 38 | 81.37 | 89.25 | 98.45 | 100.00 | A | A | A | A |
| 50 | 16 | 34 | 75.84 | 90.42 | 99.81 | 100.00 | A | A | A | A |
| 50 | 20 | 30 | 72.26 | 85.24 | 96.24 | 100.00 | A | A | A | A |
| 50 | 25 | 25 | 66.79 | 76.15 | 86.14 | 100.00 | A | A | A | A |
| 55 | 1 | 44 | 98.48 | 100.00 | 100.00 | 100.00 | A | A | A | A |
| 55 | 4 | 41 | 93.36 | 98.13 | 100.00 | 100.00 | A | A | A | A |
| 55 | 8 | 37 | 88.79 | 96.24 | 99.52 | 100.00 | A | A | A | A |
| 55 | 12 | 33 | 82.80 | 89.25 | 98.52 | 100.00 | A | A | A | A |
| 55 | 16 | 29 | 79.29 | 85.24 | 95.14 | 100.00 | A | A | A | A |
| 55 | 20 | 25 | 75.26 | 83.45 | 96.34 | 100.00 | A | A | A | A |
| 60 | 1 | 39 | 98.63 | 100.00 | 100.00 | 100.00 | A | A | A | A |
| 60 | 4 | 36 | 95.24 | 99.45 | 100.00 | 100.00 | A | A | A | A |
| 60 | 8 | 32 | 88.55 | 93.45 | 97.35 | 100.00 | A | A | A | A |
| 60 | 12 | 28 | 85.26 | 90.34 | 97.58 | 100.00 | A | A | A | A |
| 60 | 16 | 24 | 80.04 | 89.45 | 99.45 | 100.00 | A | A | A | A |
| 60 | 20 | 20 | 75.05 | 80.34 | 98.45 | 100.00 | A | A | A | B |
| 65 | 1 | 34 | 98.84 | 100.00 | 100.00 | 100.00 | A | A | A | A |
| 65 | 4 | 31 | 96.08 | 98.64 | 99.34 | 100.00 | A | A | A | A |
| 65 | 8 | 27 | 91.00 | 94.55 | 100.00 | 100.00 | A | A | A | A |
| 65 | 12 | 23 | 84.76 | 97.64 | 100.00 | 100.00 | A | A | A | A |
| 65 | 16 | 19 | 81.05 | 92.64 | 98.45 | 100.00 | A | A | A | A |
| 70 | 1 | 29 | 99.59 | 100.00 | 100.00 | 100.00 | A | A | A | A |
| 70 | 4 | 26 | 94.87 | 97.74 | 99.45 | 100.00 | A | A | A | A |
| 70 | 8 | 22 | 89.76 | 91.45 | 100.00 | 100.00 | A | A | A | B |
| 70 | 12 | 18 | 85.92 | 99.43 | 100.00 | 100.00 | A | A | A | B |

**Table 12. Results of composition, particle size distribution and stability test of sauces containing inactivated Kluyveromyces cells in Example 5**

| Proportion | | | Particle size distribution (Frequency%) | | | | Stability Test | | | |
|---|---|---|---|---|---|---|---|---|---|---|
| Dry pow der % | Rap ese ed oil% | Wat er% | ≤5µm | ≤10µm | ≤50µm | ≤100µ m | De mul sific atio n of 7 day s | De mul sific atio n of 14 day s | De mul sific atio n of 21 day s | De mul sific atio n of 28 day s |
| 30 | 1 | 69 | 96.83 | 97.44 | 100.00 | 100.00 | A | A | A | A |
| 30 | 4 | 66 | 88.94 | 98.46 | 100.00 | 100.00 | A | A | A | A |
| 30 | 8 | 62 | 79.41 | 86.45 | 97.45 | 100.00 | A | A | A | A |
| 30 | 12 | 58 | 72.56 | 82.45 | 97.45 | 100.00 | A | A | A | A |
| 30 | 16 | 54 | 66.97 | 81.67 | 96.48 | 100.00 | A | A | A | A |
| 30 | 20 | 50 | 60.06 | 76.45 | 98.45 | 100.00 | A | A | A | A |
| 30 | 25 | 45 | 55.42 | 68.45 | 89.45 | 100.00 | A | A | A | A |
| 30 | 30 | 40 | 51.95 | 64.48 | 80.64 | 100.00 | A | A | A | A |
| 35 | 1 | 64 | 98.59 | 100.00 | 100.00 | 100.00 | A | A | A | A |
| 35 | 4 | 61 | 90.03 | 97.65 | 99.45 | 100.00 | A | A | A | A |
| 35 | 8 | 57 | 81.90 | 90.45 | 99.90 | 100.00 | A | A | A | A |
| 35 | 12 | 53 | 76.01 | 85.45 | 97.45 | 100.00 | A | A | A | A |
| 35 | 16 | 49 | 69.69 | 79.44 | 95.45 | 100.00 | A | A | A | A |
| 35 | 20 | 45 | 63.87 | 73.45 | 89.45 | 100.00 | A | A | A | A |
| 35 | 25 | 40 | 58.35 | 65.42 | 88.45 | 100.00 | A | A | A | A |
| 35 | 30 | 35 | 56.26 | 75.51 | 88.32 | 100.00 | A | A | A | A |
| 40 | 1 | 59 | 99.97 | 100.00 | 100.00 | 100.00 | A | A | A | A |
| 40 | 4 | 56 | 92.34 | 100.00 | 100.00 | 100.00 | A | A | A | A |
| 40 | 8 | 52 | 84.04 | 100.00 | 100.00 | 100.00 | A | A | A | A |
| 40 | 12 | 48 | 78.82 | 89.45 | 100.00 | 100.00 | A | A | A | A |
| 40 | 16 | 44 | 72.98 | 86.45 | 100.00 | 100.00 | A | A | A | A |
| 40 | 20 | 40 | 69.05 | 83.45 | 97.44 | 100.00 | A | A | A | A |
| 40 | 25 | 35 | 61.77 | 73.56 | 89.65 | 100.00 | A | A | A | A |
| 40 | 30 | 30 | 58.46 | 68.44 | 95.44 | 100.00 | A | A | A | A |
| 45 | 1 | 54 | 99.84 | 100.00 | 100.00 | 100.00 | A | A | A | A |
| 45 | 4 | 51 | 93.51 | 97.55 | 99.99 | 100.00 | A | A | A | A |
| 45 | 8 | 47 | 86.10 | 96.54 | 100.00 | 100.00 | A | A | A | A |
| 45 | 12 | 43 | 79.86 | 89.54 | 97.68 | 100.00 | A | A | A | A |
| 45 | 16 | 39 | 74.01 | 86.45 | 97.52 | 100.00 | A | A | A | A |
| 45 | 20 | 35 | 71.01 | 85.54 | 99.47 | 100.00 | A | A | A | A |
| 45 | 25 | 30 | 65.22 | 82.34 | 90.35 | 100.00 | A | A | A | A |
| 50 | 1 | 49 | 99.42 | 100.00 | 100.00 | 100.00 | A | A | A | A |
| 50 | 4 | 46 | 93.43 | 99.37 | 100.00 | 100.00 | A | A | A | A |
| 50 | 8 | 42 | 88.54 | 100.00 | 100.00 | 100.00 | A | A | A | A |
| 50 | 12 | 38 | 81.74 | 97.63 | 100.00 | 100.00 | A | A | A | A |
| 50 | 16 | 34 | 77.78 | 82.64 | 97.52 | 100.00 | A | A | A | A |
| 50 | 20 | 30 | 72.71 | 80.64 | 94.44 | 100.00 | A | A | A | A |
| 50 | 25 | 25 | 68.75 | 79.64 | 89.55 | 100.00 | A | A | A | A |
| 55 | 1 | 44 | 98.45 | 100.00 | 100.00 | 100.00 | A | A | A | A |
| 55 | 4 | 41 | 94.15 | 99.65 | 100.00 | 100.00 | A | A | A | A |
| 55 | 8 | 37 | 88.27 | 92.65 | 97.55 | 100.00 | A | A | A | A |
| 55 | 12 | 33 | 84.27 | 90.64 | 97.65 | 100.00 | A | A | A | A |
| 55 | 16 | 29 | 77.96 | 87.54 | 96.45 | 100.00 | A | A | A | A |
| 55 | 20 | 25 | 73.56 | 82.44 | 96.99 | 100.00 | A | A | A | A |
| 60 | 1 | 39 | 99.62 | 100.00 | 100.00 | 100.00 | A | A | A | A |
| 60 | 4 | 36 | 94.21 | 99.64 | 100.00 | 100.00 | A | A | A | A |
| 60 | 8 | 32 | 89.30 | 94.56 | 99.55 | 100.00 | A | A | A | A |
| 60 | 12 | 28 | 83.60 | 89.65 | 94.62 | 100.00 | A | A | A | A |
| 60 | 16 | 24 | 80.78 | 85.64 | 95.47 | 100.00 | A | A | A | A |
| 60 | 20 | 20 | 76.32 | 83.45 | 95.64 | 100.00 | A | A | A | B |
| 65 | 1 | 34 | 98.54 | 99.42 | 100.00 | 100.00 | A | A | A | A |
| 65 | 4 | 31 | 96.12 | 100.00 | 100.00 | 100.00 | A | A | A | A |
| 65 | 8 | 27 | 90.29 | 96.79 | 99.54 | 100.00 | A | A | A | A |
| 65 | 12 | 23 | 85.14 | 93.45 | 100.00 | 100.00 | A | A | A | A |
| 65 | 16 | 19 | 81.10 | 90.45 | 97.64 | 100.00 | A | A | A | A |
| 70 | 1 | 29 | 99.00 | 100.00 | 100.00 | 100.00 | A | A | A | A |
| 70 | 4 | 26 | 96.75 | 99.45 | 100.00 | 100.00 | A | A | A | A |
| 70 | 8 | 22 | 92.22 | 96.34 | 100.00 | 100.00 | A | A | A | B |
| 70 | 12 | 18 | 86.37 | 90.45 | 97.55 | 100.00 | A | A | A | B |

**Table 13. Results of composition, particle size distribution and stability test of sauces containing inactivated Kluyveromyces cells in Example 6**

| Proportion | | | Particle size distribution (Frequency%) | | | | Stability Test | | | |
|---|---|---|---|---|---|---|---|---|---|---|
| Dry pow der % | Rap ese ed oil% | Wat er% | ≤5µm | ≤10µm | ≤50µm | ≤100µ m | De mul sific atio n of 7 day s | De mul sific atio n of 14 day s | De mul sific atio n of 21 day s | De mul sific atio n of 28 day s |
| 30 | 1 | 69 | 98.96 | 100.00 | 100.00 | 100.00 | A | A | A | A |
| 30 | 4 | 66 | 88.83 | 95.64 | 100.00 | 100.00 | A | A | A | A |
| 30 | 8 | 62 | 80.93 | 89.45 | 96.47 | 100.00 | A | A | A | A |
| 30 | 12 | 58 | 72.01 | 83.45 | 94.64 | 100.00 | A | A | A | A |
| 30 | 16 | 54 | 65.83 | 74.68 | 89.54 | 100.00 | A | A | A | A |
| 30 | 20 | 50 | 62.47 | 86.45 | 99.59 | 100.00 | A | A | A | A |
| 30 | 25 | 45 | 56.99 | 67.54 | 79.45 | 100.00 | A | A | A | A |
| 30 | 30 | 40 | 50.96 | 61.24 | 77.654 | 100.00 | A | A | A | A |
| 35 | 1 | 64 | 98.03 | 100.00 | 100.00 | 100.00 | A | A | A | A |
| 35 | 4 | 61 | 90.88 | 94.56 | 99.65 | 100.00 | A | A | A | A |
| 35 | 8 | 57 | 81.84 | 90.90 | 100.00 | 100.00 | A | A | A | A |
| 35 | 12 | 53 | 75.45 | 86.45 | 98.44 | 100.00 | A | A | A | A |
| 35 | 16 | 49 | 69.22 | 84.56 | 99.74 | 100.00 | A | A | A | A |
| 35 | 20 | 45 | 63.68 | 89.71 | 100.00 | 100.00 | A | A | A | A |
| 35 | 25 | 40 | 59.12 | 70.55 | 97.77 | 100.00 | A | A | A | A |
| 35 | 30 | 35 | 54.76 | 75.89 | 89.45 | 100.00 | A | A | A | A |
| 40 | 1 | 59 | 98.22 | 100.00 | 100.00 | 100.00 | A | A | A | A |
| 40 | 4 | 56 | 92.91 | 99.45 | 100.00 | 100.00 | A | A | A | A |
| 40 | 8 | 52 | 85.45 | 89.65 | 100.00 | 100.00 | A | A | A | A |
| 40 | 12 | 48 | 77.28 | 82.43 | 89.54 | 100.00 | A | A | A | A |
| 40 | 16 | 44 | 73.36 | 86.42 | 100.00 | 100.00 | A | A | A | A |
| 40 | 20 | 40 | 68.86 | 71.55 | 86.42 | 100.00 | A | A | A | A |
| 40 | 25 | 35 | 63.01 | 74.58 | 86.42 | 100.00 | A | A | A | A |
| 40 | 30 | 30 | 58.24 | 76.42 | 84.56 | 100.00 | A | A | A | A |
| 45 | 1 | 54 | 99.11 | 100.00 | 100.00 | 100.00 | A | A | A | A |
| 45 | 4 | 51 | 91.92 | 93.45 | 98.55 | 100.00 | A | A | A | A |
| 45 | 8 | 47 | 85.96 | 90.45 | 98.45 | 100.00 | A | A | A | A |
| 45 | 12 | 43 | 80.13 | 83.45 | 97.54 | 100.00 | A | A | A | A |
| 45 | 16 | 39 | 75.76 | 80.45 | 88.65 | 100.00 | A | A | A | A |
| 45 | 20 | 35 | 70.95 | 76.58 | 94.12 | 100.00 | A | A | A | A |
| 45 | 25 | 30 | 66.06 | 73.54 | 86.45 | 100.00 | A | A | A | A |
| 50 | 1 | 49 | 98.57 | 100.00 | 100.00 | 100.00 | A | A | A | A |
| 50 | 4 | 46 | 94.34 | 99.14 | 100.00 | 100.00 | A | A | A | A |
| 50 | 8 | 42 | 88.56 | 94.56 | 100.00 | 100.00 | A | A | A | A |
| 50 | 12 | 38 | 82.00 | 89.64 | 93.44 | 100.00 | A | A | A | A |
| 50 | 16 | 34 | 77.84 | 85.42 | 97.54 | 100.00 | A | A | A | A |
| 50 | 20 | 30 | 73.46 | 89.52 | 100.00 | 100.00 | A | A | A | A |
| 50 | 25 | 25 | 67.78 | 92.12 | 100.00 | 100.00 | A | A | A | A |
| 55 | 1 | 44 | 99.04 | 100.00 | 100.00 | 100.00 | A | A | A | A |
| 55 | 4 | 41 | 94.98 | 99.54 | 100.00 | 100.00 | A | A | A | A |
| 55 | 8 | 37 | 89.45 | 94.58 | 100.00 | 100.00 | A | A | A | A |
| 55 | 12 | 33 | 83.88 | 97.00 | 99.99 | 100.00 | A | A | A | A |
| 55 | 16 | 29 | 79.49 | 89.42 | 100.00 | 100.00 | A | A | A | A |
| 55 | 20 | 25 | 74.65 | 86.45 | 97.55 | 100.00 | A | A | A | B |
| 60 | 1 | 39 | 98.50 | 100.00 | 100.00 | 100.00 | A | A | A | A |
| 60 | 4 | 36 | 95.10 | 99.57 | 100.00 | 100.00 | A | A | A | A |
| 60 | 8 | 32 | 89.31 | 97.58 | 100.00 | 100.00 | A | A | A | A |
| 60 | 12 | 28 | 84.07 | 93.45 | 99.78 | 100.00 | A | A | A | A |
| 60 | 16 | 24 | 79.51 | 98.56 | 100.00 | 100.00 | A | A | A | A |
| 60 | 20 | 20 | 76.84 | 86.45 | 93.54 | 100.00 | A | A | A | B |
| 65 | 1 | 34 | 99.04 | 100.00 | 100.00 | 100.00 | A | A | A | A |
| 65 | 4 | 31 | 96.03 | 100.00 | 100.00 | 100.00 | A | A | A | A |
| 65 | 8 | 27 | 89.65 | 95.68 | 100.00 | 100.00 | A | A | A | A |
| 65 | 12 | 23 | 85.70 | 97.45 | 100 | 100.00 | A | A | A | A |
| 65 | 16 | 19 | 80.62 | 91.56 | 99.53 | 100.00 | A | A | A | A |
| 70 | 1 | 29 | 99.40 | 100.00 | 100.00 | 100.00 | A | A | A | A |
| 70 | 4 | 26 | 96.30 | 99.54 | 100.00 | 100.00 | A | A | A | A |
| 70 | 8 | 22 | 89.77 | 92.68 | 98.10 | 100.00 | A | A | A | A |
| 70 | 12 | 18 | 87.17 | 94.26 | 98.44 | 100.00 | A | A | A | B |

As shown in Table 9-Table 13, after shear emulsifying process until the particle sizes of each component in the suspension are all less than or equal to 100µm (the frequency of particle size≤100mµm is 100%), all can maintain a stable and uniform status without stratification for 28 days at room temperature when the proportion of inactivated *Kluyveromyces* cell powder is 30-70%, the proportion of edible oil is 1%-30%, and the proportion of water is 18%-69% .

### Example 11. Preparation of Beverages Containing Inactivated Kluyveromyces marxianus cells and Coconut Oil

Beverage of food with required particle size distribution was prepared by emulsification in a certain weight percentage of inactivated *Kluyveromyces* cell dry powder prepared in Example 5, coconut oil, and water. The specific steps are as follows:
(1) Adding the *Kluyveromyces* cell dry powder to water to the corresponding concentration and stirring until evenly diffused;
(2) Starting to shear emulsifying by emulsifying machine. Adding coconut oil slowly during the shearing process to keep the emulsification. Sampling every 2 minutes and detecting the particle size distribution of the sample by laser particle size analyzer, further emulsifying until the required particle size distribution to stop and obtain beverage of food composition containing inactivated *Kluyveromyces* cells. Observing the stability of the product at 25°C.

The results of the percentage content by weight of inactivated *Kluyveromyces* cell dry powder, coconut oil and water, the particle size distribution of composition, and the results of stability test are shown in Table 14 (A is defined as no demulsification and no stratification at all; B is defined as slight demulsification and a little amount of stratification at the top of the product; C is defined as obvious demulsification and a complete oil and water stratification of product):

**Table 14. Results of composition, particle size distribution and stability test of beverages**

| Proportion | | | Particle size distribution (Frequency%) | | | | Stability Test | | | |
|---|---|---|---|---|---|---|---|---|---|---|
| Dry pow der % | Coc onut oil% | Wat er% | ≤5µm | ≤10µm | ≤50µ m | ≤100µm | Dem ulsifi catio n of 7 days | Dem ulsifi catio n of 14 days | Dem ulsifi catio n of 21 days | Dem ulsifi catio n of 28 days |
| 2.5 | 1 | 96.5 | 75.82 | 87.86 | 95.48 | 100.00 | A | A | A | A |
| 2.5 | 4 | 93.5 | 40.64 | 68.51 | 84.91 | 100.00 | A | A | A | A |
| 2.5 | 8 | 89.5 | 25.29 | 61.52 | 82.52 | 100.00 | A | A | A | B |
| 2.5 | 12 | 85.5 | 18.69 | 58.02 | 80.46 | 100.00 | A | A | B | B |
| 2.5 | 16 | 81.5 | 17.79 | 58.40 | 81.29 | 100.00 | A | A | B | C |
| 2.5 | 20 | 77.5 | 17.66 | 54.75 | 78.01 | 100.00 | A | B | B | C |
| 2.5 | 25 | 72.5 | 14.18 | 50.88 | 76.09 | 100.00 | A | B | B | C |
| 2.5 | 30 | 67.5 | 9.20 | 53.22 | 78.46 | 99.54 | A | B | C | C |
| 2.5 | 40 | 57.5 | 11.32 | 55.21 | 78.37 | 100.00 | A | C | C | C |
| 5 | 1 | 94 | 87.60 | 90.84 | 96.61 | 100.00 | A | A | A | A |
| 5 | 4 | 91 | 59.15 | 78.24 | 90.86 | 100.00 | A | A | A | A |
| 5 | 8 | 87 | 43.33 | 67.46 | 85.36 | 100.00 | A | A | A | A |
| 5 | 12 | 83 | 29.76 | 59.66 | 82.02 | 100.00 | A | A | A | B |
| 5 | 16 | 79 | 23.92 | 60.77 | 81.24 | 100.00 | A | A | A | B |
| 5 | 20 | 75 | 20.21 | 58.44 | 79.44 | 100.00 | A | A | B | C |
| 5 | 25 | 70 | 22.94 | 56.04 | 78.15 | 100.00 | A | A | B | C |
| 5 | 30 | 65 | 17.83 | 53.49 | 76.90 | 100.00 | A | A | B | C |
| 5 | 40 | 55 | 11.45 | 54.35 | 78.11 | 100.00 | A | B | B | C |
| 10 | 1 | 89 | 96.71 | 96.97 | 99.74 | 100.00 | A | A | A | A |
| 10 | 4 | 86 | 72.64 | 83.79 | 92.02 | 100.00 | A | A | A | A |
| 10 | 8 | 82 | 55.81 | 77.22 | 89.44 | 100.00 | A | A | A | A |
| 10 | 12 | 78 | 46.21 | 72.35 | 88.23 | 100.00 | A | A | A | A |
| 10 | 16 | 74 | 41.69 | 67.07 | 85.56 | 100.00 | A | A | A | A |
| 10 | 20 | 70 | 36.05 | 61.43 | 82.46 | 100.00 | A | A | A | B |
| 10 | 25 | 65 | 34.40 | 61.45 | 82.12 | 100.00 | A | A | A | B |
| 10 | 30 | 60 | 27.10 | 58.87 | 81.60 | 100.00 | A | A | A | C |
| 10 | 40 | 50 | 22.53 | 58.50 | 81.22 | 100.00 | A | B | B | B |
| 15 | 1 | 84 | 94.85 | 97.35 | 99.86 | 100.00 | A | A | A | A |
| 15 | 4 | 81 | 84.32 | 86.80 | 94.83 | 100.00 | A | A | A | A |
| 15 | 8 | 77 | 65.51 | 81.54 | 92.58 | 100.00 | A | A | A | A |
| 15 | 12 | 73 | 58.17 | 78.83 | 91.66 | 100.00 | A | A | A | A |
| 15 | 16 | 69 | 50.86 | 72.31 | 86.58 | 100.00 | A | A | A | A |
| 15 | 20 | 65 | 47.73 | 71.30 | 86.79 | 100.00 | A | A | A | A |
| 15 | 25 | 60 | 42.42 | 69.65 | 85.81 | 100.00 | A | A | A | A |
| 15 | 30 | 55 | 35.75 | 66.47 | 85.15 | 100.00 | A | A | A | B |
| 15 | 40 | 45 | 30.29 | 64.76 | 83.47 | 100.00 | A | B | B | C |
| 20 | 1 | 79 | 98.37 | 96.84 | 99.51 | 100.00 | A | A | A | A |
| 20 | 4 | 76 | 84.59 | 89.06 | 96.92 | 100.00 | A | A | A | A |
| 20 | 8 | 72 | 74.70 | 84.65 | 94.54 | 100.00 | A | A | A | A |
| 20 | 12 | 68 | 65.75 | 77.16 | 91.00 | 100.00 | A | A | A | A |
| 20 | 16 | 64 | 60.35 | 79.62 | 92.08 | 100.00 | A | A | A | A |
| 20 | 20 | 60 | 54.43 | 76.01 | 89.64 | 100.00 | A | A | A | A |
| 20 | 25 | 55 | 50.61 | 70.04 | 85.65 | 100.00 | A | A | A | A |
| 20 | 30 | 50 | 41.82 | 70.64 | 85.76 | 100.00 | A | A | A | A |
| 20 | 40 | 40 | 39.30 | 65.95 | 83.27 | 100.00 | A | A | B | B |
| 25 | 1 | 74 | 96.85 | 97.06 | 99.22 | 100.00 | A | A | A | A |
| 25 | 4 | 71 | 87.82 | 93.76 | 98.81 | 100.00 | A | A | A | A |
| 25 | 8 | 67 | 80.06 | 84.98 | 93.89 | 100.00 | A | A | A | A |
| 25 | 12 | 63 | 73.08 | 85.13 | 93.10 | 100.00 | A | A | A | A |
| 25 | 16 | 59 | 65.23 | 77.23 | 88.77 | 100.00 | A | A | A | A |
| 25 | 20 | 55 | 61.58 | 77.80 | 89.19 | 100.00 | A | A | A | A |
| 25 | 25 | 50 | 52.73 | 70.01 | 85.59 | 100.00 | A | A | A | A |
| 25 | 30 | 45 | 45.53 | 68.83 | 86.03 | 100.00 | A | A | B | B |

### Example 12. Preparation of Sauces Containing Inactivated Kluyveromyces marxianus cells and Coconut Oil

Sauce of food with required particle size distribution was prepared by emulsification in a certain weight percentage of inactivated *Kluyveromyces* cell dry powder prepared in Example 5, coconut oil, and water. The specific steps are as follows:
(1) Adding the *Kluyveromyces* cell dry powder to water to the corresponding concentration and stirring until evenly diffused;
(2) Starting to shear emulsifying by using emulsifying machine. Adding coconut oil slowly during the shearing process to keep the emulsification. Sampling every 2 minutes and detecting the particle size distribution of the sample by laser particle size analyzer, further emulsifying until the required particle size distribution to stop and obtain sauce of food composition containing inactivated *Kluyveromyces* cells. Observing the stability of the product at 25°C.

The results of the percentage content by weight of inactivated *Kluyveromyces* cell dry powder, coconut oil and water, the particle size distribution of composition, and the results of stability test are shown in Table 15 (A is defined as no demulsification and no stratification at all; B is defined as slight demulsification and a little amount of stratification at the top of the product; C is defined as obvious demulsification and a complete oil and water stratification of product):

**Table 15. Results of composition, particle size distribution and stability test of sauces**

| Proportion | | | Particle size distribution (Frequency%) | | | | Stability Test | | | |
|---|---|---|---|---|---|---|---|---|---|---|
| Dry powd er% | Coco nut oil% | Wate r% | ≤5µm | ≤10µm | ≤50µm | ≤100µ m | Demul sificati on of 7 days | Dem ulsifi catio n of 14 days | Dem ulsifi catio n of 21 days | Demul sificati on of 28 days |
| 30 | 1 | 69 | 98.14 | 99.25 | 100.00 | 100.00 | A | A | A | A |
| 30 | 4 | 66 | 88.79 | 92.49 | 97.00 | 100.00 | A | A | A | A |
| 30 | 8 | 62 | 80.14 | 87.63 | 96.13 | 100.00 | A | A | A | A |
| 30 | 12 | 58 | 73.81 | 86.64 | 94.25 | 100.00 | A | A | A | A |
| 30 | 16 | 54 | 66.70 | 82.65 | 93.01 | 100.00 | A | A | A | A |
| 30 | 20 | 50 | 62.17 | 80.35 | 92.08 | 100.00 | A | A | A | A |
| 30 | 25 | 45 | 55.21 | 75.27 | 90.11 | 100.00 | A | A | A | A |
| 30 | 30 | 40 | 52.28 | 76.85 | 87.62 | 100.00 | A | A | A | A |
| 35 | 1 | 64 | 98.19 | 98.38 | 100.00 | 100.00 | A | A | A | A |
| 35 | 4 | 61 | 91.25 | 94.62 | 97.70 | 100.00 | A | A | A | A |
| 35 | 8 | 57 | 81.64 | 90.36 | 97.85 | 100.00 | A | A | A | A |
| 35 | 12 | 53 | 75.22 | 86.57 | 93.39 | 100.00 | A | A | A | A |
| 35 | 16 | 49 | 68.98 | 81.99 | 93.28 | 100.00 | A | A | A | A |
| 35 | 20 | 45 | 65.91 | 74.28 | 81.12 | 100.00 | A | A | A | A |
| 35 | 25 | 40 | 59.40 | 65.28 | 77.58 | 99.81 | A | A | A | A |
| 35 | 30 | 35 | 54.77 | 68.54 | 82.25 | 100.00 | A | A | A | A |
| 40 | 1 | 59 | 97.67 | 98.26 | 100.00 | 100.00 | A | A | A | A |
| 40 | 4 | 56 | 92.00 | 95.51 | 100.00 | 100.00 | A | A | A | A |
| 40 | 8 | 52 | 85.43 | 90.34 | 96.86 | 100.00 | A | A | A | A |
| 40 | 12 | 48 | 77.96 | 83.24 | 95.36 | 100.00 | A | A | A | A |
| 40 | 16 | 44 | 73.80 | 86.95 | 89.22 | 100.00 | A | A | A | A |
| 40 | 20 | 40 | 67.01 | 81.44 | 90.82 | 100.00 | A | A | A | A |
| 40 | 25 | 35 | 63.22 | 79.73 | 91.58 | 100.00 | A | A | A | A |
| 40 | 30 | 30 | 59.53 | 78.83 | 87.57 | 100.00 | A | A | A | A |
| 45 | 1 | 54 | 98.34 | 100.00 | 100.00 | 100.00 | A | A | A | A |
| 45 | 4 | 51 | 93.98 | 96.80 | 100.00 | 100.00 | A | A | A | A |
| 45 | 8 | 47 | 85.79 | 91.18 | 97.58 | 100.00 | A | A | A | A |
| 45 | 12 | 43 | 79.65 | 86.58 | 94.85 | 100.00 | A | A | A | A |
| 45 | 16 | 39 | 75.48 | 85.57 | 93.40 | 100.00 | A | A | A | A |
| 45 | 20 | 35 | 70.72 | 84.24 | 90.25 | 100.00 | A | A | A | A |
| 45 | 25 | 30 | 65.90 | 76.25 | 89.55 | 100.00 | A | A | A | A |
| 50 | 1 | 49 | 98.54 | 99.08 | 100.00 | 100.00 | A | A | A | A |
| 50 | 4 | 46 | 94.85 | 97.58 | 100.00 | 100.00 | A | A | A | A |
| 50 | 8 | 42 | 87.55 | 94.58 | 100.00 | 100.00 | A | A | A | A |
| 50 | 12 | 38 | 81.86 | 90.25 | 95.68 | 100.00 | A | A | A | A |
| 50 | 16 | 34 | 76.56 | 84.25 | 95.22 | 100.00 | A | A | A | A |
| 50 | 20 | 30 | 72.70 | 83.92 | 92.58 | 100.00 | A | A | A | A |
| 50 | 25 | 25 | 68.71 | 75.28 | 90.55 | 100.00 | A | A | A | A |
| 55 | 1 | 44 | 99.00 | 100.00 | 100.00 | 100.00 | A | A | A | A |
| 55 | 4 | 41 | 94.37 | 96.58 | 100.00 | 100.00 | A | A | A | A |
| 55 | 8 | 37 | 86.83 | 92.87 | 97.58 | 100.00 | A | A | A | A |
| 55 | 12 | 33 | 83.83 | 89.76 | 95.58 | 100.00 | A | A | A | A |
| 55 | 16 | 29 | 79.85 | 85.44 | 96.38 | 100.00 | A | A | A | A |
| 55 | 20 | 25 | 75.41 | 85.41 | 92.58 | 100.00 | A | A | A | A |
| 60 | 1 | 39 | 98.96 | 100.00 | 100.00 | 100.00 | A | A | A | A |
| 60 | 4 | 36 | 96.21 | 98.65 | 100.00 | 100.00 | A | A | A | A |
| 60 | 8 | 32 | 88.99 | 92.76 | 97.58 | 100.00 | A | A | A | A |
| 60 | 12 | 28 | 87.58 | 92.58 | 99.65 | 100.00 | A | A | A | A |
| 60 | 16 | 24 | 80.55 | 87.58 | 96.58 | 100.00 | A | A | A | A |
| 60 | 20 | 20 | 77.58 | 85.54 | 99.57 | 100.00 | A | A | A | B |
| 65 | 1 | 34 | 99.53 | 100.00 | 100.00 | 100.00 | A | A | A | A |
| 65 | 4 | 31 | 96.24 | 100.00 | 100.00 | 100.00 | A | A | A | A |
| 65 | 8 | 27 | 90.06 | 96.97 | 100.00 | 100.00 | A | A | A | A |
| 65 | 12 | 23 | 85.11 | 93.55 | 97.58 | 100.00 | A | A | A | A |
| 65 | 16 | 19 | 82.23 | 90.57 | 95.27 | 100.00 | A | A | A | A |
| 70 | 1 | 29 | 98.74 | 99.65 | 100.00 | 100.00 | A | A | A | A |
| 70 | 4 | 26 | 95.00 | 99.57 | 100.00 | 100.00 | A | A | A | A |
| 70 | 8 | 22 | 91.73 | 95.85 | 99.97 | 100.00 | A | A | A | A |
| 70 | 12 | 18 | 89.55 | 95.25 | 100.00 | 100.00 | A | A | A | A |

### Example 13. Preparation of Beverages Containing Inactivated Kluyveromyces marxianus cells and High Oleic Sunflower Seed Oil

Beverage of food with required particle size distribution was prepared by emulsification in a certain weight percentage of inactivated *Kluyveromyces* cell dry powder prepared in Example 5, high oleic sunflower seed oil, and water. The specific steps are as follows:
(1) Adding the *Kluyveromyces* cell dry powder to water to the corresponding concentration and stirring until evenly diffused;
(2) Starting to shear emulsifying by using emulsifying machine. Adding high oleic sunflower seed oil slowly during the shearing process to keep the emulsification. Sampling every 2 minutes and detecting the particle size distribution of the sample by laser particle size analyzer, further emulsifying until the required particle size distribution to stop and obtain beverage of food composition containing inactivated *Kluyveromyces* cells. Observing the stability of the product at 25°C.

The results of the percentage content by weight of inactivated *Kluyveromyces* cell dry powder, high oleic sunflower seed oil and water, the particle size distribution of composition, and the the results of stability test are shown in Table 16 (A is defined as no demulsification and no stratification at all; B is defined as slight demulsification and a little amount of stratification at the top of the product; C is defined as obvious demulsification and a complete oil and water stratification of product):

**Table 16. Results of composition, particle size distribution and stability test of beverages**

| Proportion | | | Particle size distribution (Frequency%) | | | | Stability Test | | | |
|---|---|---|---|---|---|---|---|---|---|---|
| Dry powd er% | High oleic sunfl ower seed oil% | Wate r% | ≤5µm | ≤10µm | ≤50µm | ≤100µ m | Dem ulsifi catio n of 7 days | Dem ulsifi catio n of 14 days | Dem ulsifi catio n of 21 days | Dem ulsifi catio n of 28 days |
| 2.5 | 1 | 96.5 | 75.02 | 87.79 | 99.78 | 100.00 | A | A | A | A |
| 2.5 | 4 | 93.5 | 42.66 | 75.13 | 92.34 | 100.00 | A | A | A | A |
| 2.5 | 8 | 89.5 | 24.69 | 66.19 | 88.67 | 100.00 | A | A | A | B |
| 2.5 | 12 | 85.5 | 18.26 | 58.83 | 84.63 | 100.00 | A | A | B | B |
| 2.5 | 16 | 81.5 | 17.08 | 58.81 | 84.51 | 100.00 | A | A | B | C |
| 2.5 | 20 | 77.5 | 12.22 | 61.25 | 85.00 | 100.00 | A | B | B | C |
| 2.5 | 25 | 72.5 | 13.26 | 56.98 | 85.19 | 100.00 | A | B | C | C |
| 2.5 | 30 | 67.5 | 12.95 | 56.87 | 84.45 | 98.54 | A | B | C | C |
| 2.5 | 40 | 57.5 | 7.92 | 55.79 | 83.22 | 100.00 | A | C | C | C |
| 5 | 1 | 94 | 85.22 | 95.49 | 104.82 | 100.00 | A | A | A | A |
| 5 | 4 | 91 | 61.33 | 80.12 | 96.23 | 100.00 | A | A | A | A |
| 5 | 8 | 87 | 40.65 | 74.10 | 93.11 | 100.00 | A | A | A | A |
| 5 | 12 | 83 | 34.81 | 70.40 | 92.13 | 100.00 | A | A | A | B |
| 5 | 16 | 79 | 30.01 | 68.22 | 88.60 | 100.00 | A | A | A | B |
| 5 | 20 | 75 | 21.52 | 65.72 | 87.94 | 100.00 | A | A | B | C |
| 5 | 25 | 70 | 17.36 | 59.52 | 85.68 | 100.00 | A | A | B | C |
| 5 | 30 | 65 | 14.34 | 59.77 | 85.16 | 100.00 | A | A | B | C |
| 5 | 40 | 55 | 13.69 | 58.22 | 83.40 | 100.00 | A | B | B | C |
| 10 | 1 | 89 | 95.99 | 98.54 | 100.00 | 100.00 | A | A | A | A |
| 10 | 4 | 86 | 73.98 | 88.49 | 98.47 | 100.00 | A | A | A | A |
| 10 | 8 | 82 | 57.24 | 80.19 | 95.99 | 100.00 | A | A | A | A |
| 10 | 12 | 78 | 47.70 | 78.36 | 94.41 | 100.00 | A | A | A | A |
| 10 | 16 | 74 | 39.21 | 70.04 | 91.30 | 100.00 | A | A | A | A |
| 10 | 20 | 70 | 39.32 | 69.40 | 89.71 | 100.00 | A | A | A | B |
| 10 | 25 | 65 | 29.47 | 70.14 | 91.01 | 100.00 | A | A | A | B |
| 10 | 30 | 60 | 27.92 | 65.63 | 88.13 | 100.00 | A | A | A | C |
| 10 | 40 | 50 | 22.02 | 62.04 | 87.47 | 100.00 | A | B | B | B |
| 15 | 1 | 84 | 99.55 | 100.00 | 100.00 | 100.00 | A | A | A | A |
| 15 | 4 | 81 | 82.20 | 91.96 | 100.00 | 100.00 | A | A | A | A |
| 15 | 8 | 77 | 69.21 | 84.94 | 94.64 | 100.00 | A | A | A | A |
| 15 | 12 | 73 | 55.98 | 82.79 | 97.36 | 100.00 | A | A | A | A |
| 15 | 16 | 69 | 54.47 | 82.37 | 96.06 | 100.00 | A | A | A | A |
| 15 | 20 | 65 | 43.84 | 73.29 | 92.88 | 100.00 | A | A | A | A |
| 15 | 25 | 60 | 38.40 | 74.96 | 92.11 | 100.00 | A | A | A | A |
| 15 | 30 | 55 | 39.19 | 73.53 | 91.37 | 99.86 | A | A | A | B |
| 15 | 40 | 45 | 30.68 | 68.12 | 90.80 | 100.00 | A | B | B | C |
| 20 | 1 | 79 | 99.63 | 99.97 | 100.00 | 100.00 | A | A | A | A |
| 20 | 4 | 76 | 88.29 | 94.51 | 99.67 | 100.00 | A | A | A | A |
| 20 | 8 | 72 | 77.33 | 89.28 | 98.47 | 100.00 | A | A | A | A |
| 20 | 12 | 68 | 67.05 | 83.14 | 97.32 | 100.00 | A | A | A | A |
| 20 | 16 | 64 | 58.16 | 83.07 | 96.67 | 100.00 | A | A | A | A |
| 20 | 20 | 60 | 50.24 | 80.61 | 97.59 | 100.00 | A | A | A | A |
| 20 | 25 | 55 | 45.53 | 72.60 | 91.92 | 100.00 | A | A | A | A |
| 20 | 30 | 50 | 43.00 | 75.19 | 93.32 | 100.00 | A | A | A | A |
| 20 | 40 | 40 | 39.04 | 69.18 | 90.86 | 100.00 | A | A | B | B |
| 25 | 1 | 74 | 97.57 | 100.00 | 100.00 | 100.00 | A | A | A | A |
| 25 | 4 | 71 | 88.32 | 97.22 | 100.00 | 100.00 | A | A | A | A |
| 25 | 8 | 67 | 78.60 | 91.93 | 100.00 | 100.00 | A | A | A | A |
| 25 | 12 | 63 | 70.04 | 90.14 | 98.47 | 100.00 | A | A | A | A |
| 25 | 16 | 59 | 65.99 | 85.91 | 98.56 | 100.00 | A | A | A | A |
| 25 | 20 | 55 | 61.36 | 83.19 | 97.14 | 100.00 | A | A | A | A |
| 25 | 25 | 50 | 56.03 | 82.50 | 98.26 | 100.00 | A | A | A | A |
| 25 | 30 | 45 | 49.50 | 79.92 | 95.48 | 100.00 | A | A | B | B |

### Example 14. Preparation of Sauces Containing Inactivated Kluyveromyces marxianus cells and High Oleic Sunflower Seed Oil

Sauce of food with required particle size distribution was prepared by emulsification in a certain weight percentage of inactivated *Kluyveromyces* cell dry powder prepared in Example 5, high oleic sunflower seed oil, and water. The specific steps are as follows:
(1) Adding the *Kluyveromyces* cell dry powder to water to the corresponding concentration and stirring until evenly diffused;
(2) Starting to shear emulsifying by using emulsifying machine. Adding high oleic sunflower seed oil slowly during the shearing process to keep the emulsification. Sampling every 2 minutes and detecting the particle size distribution of the sample by laser particle size analyzer, further emulsifying until the required particle size distribution to stop and obtain sauce of food composition containing inactivated *Kluyveromyces* cells. Observing the stability of the product at 25°C.

The results of the percentage content by weight of inactivated *Kluyveromyces* cell dry powder, high oleic sunflower seed oil and water, the particle size distribution of composition, and the the results of stability test are shown in Table 17 (A is defined as no demulsification and no stratification at all; B is defined as slight demulsification and a little amount of stratification at the top of the product; C is defined as obvious demulsification and a complete oil and water stratification of product):

**Table 17. Results of composition, particle size distribution and stability test of sauces**

| Proportion | | | Particle size distribution (Frequency%) | | | | Stability Test | | | |
|---|---|---|---|---|---|---|---|---|---|---|
| Dry powd er% | High oleic sunfl ower seed oil% | Wate r% | ≤5µm | ≤10µm | ≤50µm | ≤100µm | Dem ulsification of 7 days | Dem ulsifi cation of 14 days | Dem ulsifi cation of 21 days | Dem ulsifi cation of 28 days |
| 30 | 1 | 69 | 97.07 | 99.52 | 100.00 | 100.00 | A | A | A | A |
| 30 | 4 | 66 | 90.76 | 93.26 | 97.85 | 100.00 | A | A | A | A |
| 30 | 8 | 62 | 81.25 | 88.24 | 94.94 | 100.00 | A | A | A | A |
| 30 | 12 | 58 | 73.25 | 85.14 | 93.57 | 100.00 | A | A | A | A |
| 30 | 16 | 54 | 68.25 | 73.58 | 86.24 | 100.00 | A | A | A | A |
| 30 | 20 | 50 | 63.25 | 78.25 | 91.03 | 100.00 | A | A | A | A |
| 30 | 25 | 45 | 56.28 | 75.89 | 88.96 | 100.00 | A | A | A | A |
| 30 | 30 | 40 | 52.36 | 65.58 | 80.25 | 100.00 | A | A | A | A |
| 35 | 1 | 64 | 97.88 | 100.00 | 100.00 | 100.00 | A | A | A | A |
| 35 | 4 | 61 | 90.55 | 95.58 | 98.58 | 100.00 | A | A | A | A |
| 35 | 8 | 57 | 83.56 | 90.54 | 96.57 | 100.00 | A | A | A | A |
| 35 | 12 | 53 | 76.58 | 85.57 | 93.58 | 100.00 | A | A | A | A |
| 35 | 16 | 49 | 72.58 | 80.58 | 86.58 | 100.00 | A | A | A | A |
| 35 | 20 | 45 | 65.85 | 75.58 | 86.68 | 100.00 | A | A | A | A |
| 35 | 25 | 40 | 60.25 | 75.28 | 89.58 | 100.00 | A | A | A | A |
| 35 | 30 | 35 | 58.58 | 66.82 | 76.85 | 98.33 | A | A | A | A |
| 40 | 1 | 59 | 98.85 | 100.00 | 100.00 | 100.00 | A | A | A | A |
| 40 | 4 | 56 | 93.58 | 99.37 | 100.00 | 100.00 | A | A | A | A |
| 40 | 8 | 52 | 85.58 | 91.85 | 97.58 | 100.00 | A | A | A | A |
| 40 | 12 | 48 | 79.52 | 85.68 | 98.58 | 100.00 | A | A | A | A |
| 40 | 16 | 44 | 76.46 | 80.69 | 92.98 | 100.00 | A | A | A | A |
| 40 | 20 | 40 | 70.30 | 81.86 | 93.51 | 100.00 | A | A | A | A |
| 40 | 25 | 35 | 63.58 | 73.67 | 86.47 | 100.00 | A | A | A | A |
| 40 | 30 | 30 | 60.99 | 75.50 | 88.97 | 100.00 | A | A | A | A |
| 45 | 1 | 54 | 97.89 | 100.00 | 100.00 | 100.00 | A | A | A | A |
| 45 | 4 | 51 | 94.74 | 95.58 | 96.55 | 100.00 | A | A | A | A |
| 45 | 8 | 47 | 86.52 | 92.58 | 97.47 | 100.00 | A | A | A | A |
| 45 | 12 | 43 | 83.57 | 90.35 | 96.57 | 100.00 | A | A | A | A |
| 45 | 16 | 39 | 76.58 | 85.67 | 94.74 | 100.00 | A | A | A | A |
| 45 | 20 | 35 | 73.67 | 85.21 | 92.59 | 100.00 | A | A | A | A |
| 45 | 25 | 30 | 69.55 | 71.69 | 86.34 | 100.00 | A | A | A | A |
| 50 | 1 | 49 | 99.37 | 100.00 | 100.00 | 100.00 | A | A | A | A |
| 50 | 4 | 46 | 95.49 | 99.87 | 100.00 | 100.00 | A | A | A | A |
| 50 | 8 | 42 | 88.59 | 92.57 | 99.80 | 100.00 | A | A | A | A |
| 50 | 12 | 38 | 83.47 | 89.64 | 96.57 | 100.00 | A | A | A | A |
| 50 | 16 | 34 | 78.59 | 83.69 | 94.52 | 100.00 | A | A | A | A |
| 50 | 20 | 30 | 75.67 | 80.69 | 93.78 | 100.00 | A | A | A | A |
| 50 | 25 | 25 | 67.82 | 82.10 | 92.34 | 100.00 | A | A | A | A |
| 55 | 1 | 44 | 99.81 | 100.00 | 100.00 | 100.00 | A | A | A | A |
| 55 | 4 | 41 | 95.67 | 98.31 | 99.19 | 100.00 | A | A | A | A |
| 55 | 8 | 37 | 90.74 | 96.47 | 100.00 | 100.00 | A | A | A | A |
| 55 | 12 | 33 | 86.47 | 90.88 | 97.39 | 100.00 | A | A | A | A |
| 55 | 16 | 29 | 80.28 | 87.80 | 96.58 | 100.00 | A | A | A | A |
| 55 | 20 | 25 | 76.25 | 80.44 | 93.34 | 100.00 | A | A | A | A |
| 60 | 1 | 39 | 99.26 | 100.00 | 100.00 | 100.00 | A | A | A | A |
| 60 | 4 | 36 | 96.37 | 97.58 | 99.41 | 100.00 | A | A | A | A |
| 60 | 8 | 32 | 90.15 | 96.79 | 100.00 | 100.00 | A | A | A | A |
| 60 | 12 | 28 | 86.37 | 98.10 | 100.00 | 100.00 | A | A | A | A |
| 60 | 16 | 24 | 82.67 | 88.88 | 96.14 | 100.00 | A | A | A | A |
| 60 | 20 | 20 | 78.68 | 95.64 | 100.00 | 100.00 | A | A | A | B |
| 65 | 1 | 34 | 99.48 | 100.00 | 100.00 | 100.00 | A | A | A | A |
| 65 | 4 | 31 | 96.33 | 97.67 | 100.00 | 100.00 | A | A | A | A |
| 65 | 8 | 27 | 93.22 | 96.77 | 100.00 | 100.00 | A | A | A | A |
| 65 | 12 | 23 | 87.68 | 93.57 | 99.66 | 100.00 | A | A | A | A |
| 65 | 16 | 19 | 86.24 | 97.21 | 100.00 | 100.00 | A | A | A | A |
| 70 | 1 | 29 | 91.39 | 95.77 | 99.69 | 100.00 | A | A | A | A |
| 70 | 4 | 26 | 96.96 | 99.85 | 100.00 | 100.00 | A | A | A | A |
| 70 | 8 | 22 | 90.77 | 94.67 | 99.12 | 100.00 | A | A | A | A |
| 70 | 12 | 18 | 89.65 | 90.35 | 95.77 | 100.00 | A | A | A | A |

### Example 15. Preparation of Beverages Containing Inactivated Kluyveromyces marxianus cells and Canola Oil

Beverage of food with required particle size distribution was prepared by emulsification in a certain weight percentage of inactivated *Kluyveromyces* cell dry powder prepared in Example 5, canola oil, and water. The specific steps are as follows:
(1) Adding the *Kluyveromyces* cell dry powder to water to the corresponding concentration and stirring until evenly diffused;
(2) Starting to shear emulsifying by using emulsifying machine. Adding canola oil slowly during the shearing process to keep the emulsification. Sampling every 2 minutes and detecting the particle size distribution of the sample by laser particle size analyzer, further emulsifying until the required particle size distribution to stop and obtain beverage of food composition containing inactivated *Kluyveromyces* cells. Observing the stability of the product at 25°C.

The results of the percentage content by weight of inactivated *Kluyveromyces* cell dry powder, canola oil and water, the particle size distribution of composition, and the results of the stability test are shown in Table 18 (A is defined as no demulsification and no stratification at all; B is defined as slight demulsification and a little amount of stratification at the top of the product; C is defined as obvious demulsification and a complete oil and water stratification of product):

**Table 18. Results of composition, particle size distribution and stability test of beverages**

| Proportion | | | Particle size distribution (Frequency%) | | | | Stability Test | | | |
|---|---|---|---|---|---|---|---|---|---|---|
| Dry powd er% | Cano la oil% | Wate r% | ≤5µm | ≤10µm | ≤50µm | ≤100µm | Dem ulsifi catio n of 7 days | Dem ulsifi catio n of 14 days | Dem ulsifi catio n of 21 days | Dem ulsifi catio n of 28 days |
| 2.5 | 1 | 96.5 | 76.52 | 84.29 | 90.62 | 99.96 | A | A | A | A |
| 2.5 | 4 | 93.5 | 39.33 | 63.95 | 81.13 | 100.00 | A | A | A | A |
| 2.5 | 8 | 89.5 | 26.29 | 58.63 | 79.43 | 100.00 | A | A | A | B |
| 2.5 | 12 | 85.5 | 21.46 | 55.26 | 77.82 | 100.00 | A | A | B | B |
| 2.5 | 16 | 81.5 | 18.09 | 55.49 | 77.41 | 100.00 | A | A | B | C |
| 2.5 | 20 | 77.5 | 11.69 | 49.73 | 74.45 | 100.00 | A | B | B | C |
| 2.5 | 25 | 72.5 | 10.13 | 52.38 | 76.10 | 100.00 | A | B | B | C |
| 2.5 | 30 | 67.5 | 14.23 | 52.39 | 76.25 | 99.74 | A | B | B | C |
| 2.5 | 40 | 57.5 | 12.64 | 53.76 | 87.54 | 100.00 | A | C | C | C |
| 5 | 1 | 94 | 85.16 | 90.32 | 96.58 | 100.00 | A | A | A | A |
| 5 | 4 | 91 | 55.85 | 73.83 | 89.64 | 100.00 | A | A | A | A |
| 5 | 8 | 87 | 44.96 | 70.51 | 84.05 | 100.00 | A | A | A | A |
| 5 | 12 | 83 | 34.14 | 62.52 | 81.50 | 100.00 | A | A | A | B |
| 5 | 16 | 79 | 30.60 | 63.87 | 90.54 | 100.00 | A | A | A | B |
| 5 | 20 | 75 | 22.24 | 56.80 | 77.38 | 100.00 | A | A | B | C |
| 5 | 25 | 70 | 22.70 | 59.87 | 85.62 | 100.00 | A | A | B | C |
| 5 | 30 | 65 | 20.43 | 58.65 | 80.47 | 100.00 | A | A | B | C |
| 5 | 40 | 55 | 14.65 | 51.35 | 74.31 | 100.00 | A | B | B | C |
| 10 | 1 | 89 | 94.11 | 95.66 | 100.00 | 100.00 | A | A | A | A |
| 10 | 4 | 86 | 73.35 | 85.43 | 91.71 | 100.00 | A | A | A | A |
| 10 | 8 | 82 | 60.42 | 80.36 | 97.54 | 100.00 | A | A | A | A |
| 10 | 12 | 78 | 45.88 | 72.48 | 85.69 | 100.00 | A | A | A | A |
| 10 | 16 | 74 | 44.24 | 70.54 | 87.68 | 100.00 | A | A | A | A |
| 10 | 20 | 70 | 33.36 | 64.67 | 81.25 | 100.00 | A | A | A | B |
| 10 | 25 | 65 | 32.12 | 61.38 | 80.08 | 100.00 | A | A | A | B |
| 10 | 30 | 60 | 25.95 | 60.77 | 79.27 | 100.00 | A | A | A | C |
| 10 | 40 | 50 | 22.57 | 59.52 | 79.96 | 100.00 | A | B | B | B |
| 15 | 1 | 84 | 99.47 | 100.00 | 100.00 | 100.00 | A | A | A | A |
| 15 | 4 | 81 | 81.87 | 84.30 | 91.88 | 100.00 | A | A | A | A |
| 15 | 8 | 77 | 69.95 | 81.37 | 88.62 | 100.00 | A | A | A | A |
| 15 | 12 | 73 | 61.95 | 78.54 | 90.54 | 100.00 | A | A | A | A |
| 15 | 16 | 69 | 50.55 | 69.81 | 83.85 | 100.00 | A | A | A | A |
| 15 | 20 | 65 | 46.60 | 70.76 | 89.54 | 100.00 | A | A | A | A |
| 15 | 25 | 60 | 39.57 | 69.21 | 82.86 | 98.54 | A | A | A | A |
| 15 | 30 | 55 | 38.13 | 68.54 | 82.25 | 100.00 | A | A | A | B |
| 15 | 40 | 45 | 32.45 | 59.24 | 79.66 | 100.00 | A | B | B | C |
| 20 | 1 | 79 | 99.84 | 100.00 | 100.00 | 100.00 | A | A | A | A |
| 20 | 4 | 76 | 87.54 | 100.00 | 100.00 | 100.00 | A | A | A | A |
| 20 | 8 | 72 | 76.28 | 85.69 | 91.01 | 100.00 | A | A | A | A |
| 20 | 12 | 68 | 65.22 | 79.78 | 88.76 | 100.00 | A | A | A | A |
| 20 | 16 | 64 | 56.14 | 76.89 | 88.52 | 100.00 | A | A | A | A |
| 20 | 20 | 60 | 54.09 | 76.78 | 88.16 | 100.00 | A | A | A | A |
| 20 | 25 | 55 | 44.76 | 67.14 | 83.59 | 100.00 | A | A | A | A |
| 20 | 30 | 50 | 43.61 | 71.71 | 86.54 | 100.00 | A | A | A | A |
| 20 | 40 | 40 | 33.40 | 59.53 | 79.58 | 100.00 | A | A | B | B |
| 25 | 1 | 74 | 98.07 | 100.00 | 100.00 | 100.00 | A | A | A | A |
| 25 | 4 | 71 | 89.64 | 92.05 | 95.83 | 100.00 | A | A | A | A |
| 25 | 8 | 67 | 80.80 | 83.32 | 91.10 | 100.00 | A | A | A | A |
| 25 | 12 | 63 | 72.55 | 79.76 | 89.02 | 100.00 | A | A | A | A |
| 25 | 16 | 59 | 64.50 | 75.50 | 89.54 | 100.00 | A | A | A | A |
| 25 | 20 | 55 | 57.16 | 77.66 | 87.69 | 100.00 | A | A | A | A |
| 25 | 25 | 50 | 52.19 | 73.87 | 89.65 | 100.00 | A | A | A | A |
| 25 | 30 | 45 | 47.90 | 67.50 | 83.91 | 100.00 | A | A | B | B |

### Example 16. Preparation of Sauces Containing Inactivated Kluyveromyces marxianus cells and Canola Oil

Sauce of food with required particle size distribution was prepared by emulsification in a certain weight percentage of inactivated *Kluyveromyces* cell dry powder prepared in Example 5, canola oil, and water. The specific steps are as follows:
(1) Adding the *Kluyveromyces* cell dry powder to water to the corresponding concentration and stirring until evenly diffused;
(2) Starting to shear emulsifying by emulsifying machine. Adding canola oil slowly during the shearing process to keep the emulsification. Sampling every 2 minutes and detecting the particle size distribution of the sample by laser particle size analyzer, further emulsifying until the required particle size distribution to stop and obtain sauce of food composition containing inactivated *Kluyveromyces* cells. Observing the stability of the product at 25°C.

The results of the percentage content by weight of inactivated *Kluyveromyces* cell dry powder, canola oil and water, the particle size distribution of composition, and the results of the stability test are shown in Table 19 (A is defined as no demulsification and no stratification at all; B is defined as slight demulsification and a little amount of stratification at the top of the product; C is defined as obvious demulsification and a complete oil and water stratification of product):

**Table 19. Results of composition, particle size distribution and stability test of sauces**

| Proportion | | | Particle size distribution (Frequency%) | | | | Stability Test | | | |
|---|---|---|---|---|---|---|---|---|---|---|
| Dry powd er% | Cano la oil% | Wate r% | ≤5µm | ≤10µm | ≤50µm | ≤100µ m | Dem ulsifi catio n of 7 days | Dem ulsifi catio n of 14 days | Dem ulsifi catio n of 21 days | Dem ulsifi catio n of 28 days |
| 30 | 1 | 69 | 98.57 | 100.00 | 100.00 | 100.00 | A | A | A | A |
| 30 | 4 | 66 | 89.85 | 94.02 | 98.39 | 100.00 | A | A | A | A |
| 30 | 8 | 62 | 80.91 | 89.64 | 95.67 | 100.00 | A | A | A | A |
| 30 | 12 | 58 | 72.04 | 80.49 | 94.76 | 100.00 | A | A | A | A |
| 30 | 16 | 54 | 67.19 | 83.24 | 91.25 | 100.00 | A | A | A | A |
| 30 | 20 | 50 | 61.52 | 78.68 | 91.57 | 100.00 | A | A | A | A |
| 30 | 25 | 45 | 54.63 | 66.57 | 76.97 | 99.21 | A | A | A | A |
| 30 | 30 | 40 | 52.46 | 75.20 | 88.47 | 100.00 | A | A | A | A |
| 35 | 1 | 64 | 99.68 | 100.00 | 100.00 | 100.00 | A | A | A | A |
| 35 | 4 | 61 | 91.76 | 93.26 | 98.55 | 100.00 | A | A | A | A |
| 35 | 8 | 57 | 83.67 | 89.67 | 95.85 | 100.00 | A | A | A | A |
| 35 | 12 | 53 | 77.18 | 84.38 | 93.57 | 100.00 | A | A | A | A |
| 35 | 16 | 49 | 70.36 | 79.65 | 85.69 | 100.00 | A | A | A | A |
| 35 | 20 | 45 | 66.11 | 75.69 | 81.02 | 100.00 | A | A | A | A |
| 35 | 25 | 40 | 60.39 | 67.89 | 89.25 | 100.00 | A | A | A | A |
| 35 | 30 | 35 | 56.34 | 78.08 | 91.29 | 100.00 | A | A | A | A |
| 40 | 1 | 59 | 99.93 | 100.00 | 100.00 | 100.00 | A | A | A | A |
| 40 | 4 | 56 | 93.05 | 95.37 | 98.59 | 100.00 | A | A | A | A |
| 40 | 8 | 52 | 89.54 | 96.57 | 99.66 | 100.00 | A | A | A | A |
| 40 | 12 | 48 | 78.43 | 88.99 | 96.26 | 100.00 | A | A | A | A |
| 40 | 16 | 44 | 73.57 | 85.67 | 93.32 | 100.00 | A | A | A | A |
| 40 | 20 | 40 | 67.50 | 82.83 | 91.99 | 99.12 | A | A | A | A |
| 40 | 25 | 35 | 62.99 | 80.27 | 94.77 | 100.00 | A | A | A | A |
| 40 | 30 | 30 | 57.96 | 77.57 | 90.12 | 100.00 | A | A | A | A |
| 45 | 1 | 54 | 99.84 | 100.00 | 100.00 | 100.00 | A | A | A | A |
| 45 | 4 | 51 | 92.54 | 98.47 | 98.99 | 100.00 | A | A | A | A |
| 45 | 8 | 47 | 86.18 | 92.77 | 97.52 | 100.00 | A | A | A | A |
| 45 | 12 | 43 | 79.97 | 88.37 | 96.57 | 100.00 | A | A | A | A |
| 45 | 16 | 39 | 74.36 | 88.57 | 96.27 | 100.00 | A | A | A | A |
| 45 | 20 | 35 | 69.56 | 83.29 | 97.58 | 100.00 | A | A | A | A |
| 45 | 25 | 30 | 65.24 | 83.28 | 92.67 | 100.00 | A | A | A | A |
| 50 | 1 | 49 | 99.36 | 100.00 | 100.00 | 100.00 | A | A | A | A |
| 50 | 4 | 46 | 94.62 | 96.25 | 99.81 | 100.00 | A | A | A | A |
| 50 | 8 | 42 | 87.06 | 93.47 | 96.79 | 100.00 | A | A | A | A |
| 50 | 12 | 38 | 82.96 | 90.71 | 97.22 | 100.00 | A | A | A | A |
| 50 | 16 | 34 | 78.22 | 88.67 | 96.57 | 100.00 | A | A | A | A |
| 50 | 20 | 30 | 73.52 | 84.61 | 93.22 | 100.00 | A | A | A | A |
| 50 | 25 | 25 | 68.68 | 82.09 | 93.30 | 100.00 | A | A | A | A |
| 55 | 1 | 44 | 99.37 | 100.00 | 100.00 | 100.00 | A | A | A | A |
| 55 | 4 | 41 | 95.38 | 97.22 | 99.49 | 100.00 | A | A | A | A |
| 55 | 8 | 37 | 89.33 | 93.44 | 97.75 | 100.00 | A | A | A | A |
| 55 | 12 | 33 | 84.26 | 90.39 | 98.66 | 100.00 | A | A | A | A |
| 55 | 16 | 29 | 78.60 | 88.65 | 95.44 | 100.00 | A | A | A | A |
| 55 | 20 | 25 | 74.45 | 86.55 | 92.32 | 100.00 | A | A | A | A |
| 60 | 1 | 39 | 99.36 | 100.00 | 100.00 | 100.00 | A | A | A | A |
| 60 | 4 | 36 | 95.14 | 95.29 | 98.54 | 100.00 | A | A | A | A |
| 60 | 8 | 32 | 90.30 | 94.69 | 98.94 | 100.00 | A | A | A | A |
| 60 | 12 | 28 | 85.06 | 91.05 | 97.40 | 100.00 | A | A | A | A |
| 60 | 16 | 24 | 80.12 | 89.23 | 98.55 | 100.00 | A | A | A | A |
| 60 | 20 | 20 | 76.14 | 87.65 | 94.47 | 100.00 | A | A | A | B |
| 65 | 1 | 34 | 98.58 | 100.00 | 100.00 | 100.00 | A | A | A | A |
| 65 | 4 | 31 | 95.44 | 97.22 | 90.39 | 100.00 | A | A | A | A |
| 65 | 8 | 27 | 92.33 | 95.89 | 99.70 | 100.00 | A | A | A | A |
| 65 | 12 | 23 | 85.66 | 91.45 | 98.22 | 100.00 | A | A | A | A |
| 65 | 16 | 19 | 80.80 | 88.90 | 94.87 | 100.00 | A | A | A | A |
| 70 | 1 | 29 | 99.59 | 100.00 | 100.00 | 100.00 | A | A | A | A |
| 70 | 4 | 26 | 96.75 | 98.95 | 100.00 | 100.00 | A | A | A | A |
| 70 | 8 | 22 | 94.95 | 99.69 | 100.00 | 100.00 | A | A | A | A |
| 70 | 12 | 18 | 86.41 | 90.82 | 97.04 | 100.00 | A | A | A | A |

### Example 17. Preparation of Beverages Containing Inactivated Kluyveromyces marxianus cells and Medium Chain Triglyceride

Beverage of food with required particle size distribution was prepared by emulsification in a certain weight percentage of inactivated *Kluyveromyces* cell dry powder prepared in Example 5, medium chain triglyceride, and water. The specific steps are as follows:
(1) Adding the *Kluyveromyces* cell dry powder to water to the corresponding concentration and stirring until evenly diffused;
(2) Starting to shear emulsifying by emulsifying machine. Adding medium chain triglyceride slowly during the shearing process to keep the emulsification. Sampling every 2 minutes and detecting the particle size distribution of the sample by laser particle size analyzer, further emulsifying until the required particle size distribution to stop and obtain beverage of food composition containing inactivated *Kluyveromyces* cells. Observing the stability of the product at 25°C.

The results of the percentage content by weight of inactivated *Kluyveromyces* cell dry powder, medium chain triglyceride and water, the particle size distribution of composition, and the results of the stability test are shown in Table 20 (A is defined as no demulsification and no stratification at all; B is defined as slight demulsification and a little amount of stratification at the top of the product; C is defined as obvious demulsification and a complete oil and water stratification of product):

**Table 20. Results of composition, particle size distribution and stability test of beverages**

| Proportion | | | Particle size distribution (Frequency%) | | | | Stability Test | | | |
|---|---|---|---|---|---|---|---|---|---|---|
| Dry powd er% | Medi um chain trigly cerid e % | Wate r% | ≤5µm | ≤10µm | ≤50µm | ≤100µ m | De m uls ific ati on of 7 da ys | Demul sificati on of 14 days | Dem ulsifi catio n of 21 days | Dem ulsifi catio n of 28 days |
| 2.5 | 1 | 96.5 | 78.62 | 93.52 | 92.17 | 100.00 | A | A | A | A |
| 2.5 | 4 | 93.5 | 43.24 | 76.26 | 85.96 | 100.00 | A | A | A | A |
| 2.5 | 8 | 89.5 | 24.85 | 65.24 | 74.74 | 100.00 | A | A | A | B |
| 2.5 | 12 | 85.5 | 23.48 | 68.54 | 80.54 | 100.00 | A | A | B | B |
| 2.5 | 16 | 81.5 | 16.22 | 60.85 | 82.24 | 100.00 | A | A | B | C |
| 2.5 | 20 | 77.5 | 17.01 | 60.03 | 79.54 | 100.00 | A | B | B | C |
| 2.5 | 25 | 72.5 | 9.63 | 55.38 | 72.58 | 100.00 | A | B | B | C |
| 2.5 | 30 | 67.5 | 12.77 | 50.25 | 88.65 | 100.00 | A | B | B | C |
| 2.5 | 40 | 57.5 | 7.00 | 60.25 | 78.22 | 100.00 | A | C | C | C |
| 5 | 1 | 94 | 85.84 | 99.17 | 100.00 | 100.00 | A | A | A | A |
| 5 | 4 | 91 | 59.35 | 87.57 | 90.25 | 100.00 | A | A | A | A |
| 5 | 8 | 87 | 44.98 | 75.28 | 83.65 | 100.00 | A | A | A | A |
| 5 | 12 | 83 | 32.03 | 69.54 | 80.24 | 100.00 | A | A | A | B |
| 5 | 16 | 79 | 29.57 | 72.58 | 82.65 | 100.00 | A | A | A | B |
| 5 | 20 | 75 | 21.29 | 67.55 | 77.41 | 100.00 | A | A | B | C |
| 5 | 25 | 70 | 22.57 | 68.87 | 80.93 | 100.00 | A | A | B | C |
| 5 | 30 | 65 | 19.18 | 60.68 | 80.32 | 100.00 | A | A | B | C |
| 5 | 40 | 55 | 14.53 | 65.52 | 77.06 | 100.00 | A | B | B | C |
| 10 | 1 | 89 | 95.19 | 99.55 | 100.00 | 100.00 | A | A | A | A |
| 10 | 4 | 86 | 72.98 | 90.88 | 98.55 | 100.00 | A | A | A | A |
| 10 | 8 | 82 | 62.62 | 89.42 | 92.30 | 100.00 | A | A | A | A |
| 10 | 12 | 78 | 45.89 | 75.89 | 82.35 | 100.00 | A | A | A | A |
| 10 | 16 | 74 | 40.76 | 69.55 | 85.18 | 100.00 | A | A | A | A |
| 10 | 20 | 70 | 39.11 | 70.25 | 80.55 | 100.00 | A | A | A | B |
| 10 | 25 | 65 | 28.54 | 65.25 | 78.54 | 100.00 | A | A | A | B |
| 10 | 30 | 60 | 28.25 | 65.47 | 70.54 | 99.45 | A | A | A | C |
| 10 | 40 | 50 | 22.95 | 63.74 | 79.54 | 100.00 | A | B | B | B |
| 15 | 1 | 84 | 94.75 | 98.55 | 99.99 | 100.00 | A | A | A | A |
| 15 | 4 | 81 | 83.36 | 92.66 | 97.52 | 100.00 | A | A | A | A |
| 15 | 8 | 77 | 66.02 | 85.64 | 90.54 | 100.00 | A | A | A | A |
| 15 | 12 | 73 | 60.37 | 87.65 | 95.57 | 100.00 | A | A | A | A |
| 15 | 16 | 69 | 48.82 | 59.54 | 79.55 | 100.00 | A | A | A | A |
| 15 | 20 | 65 | 49.28 | 80.07 | 89.54 | 100.00 | A | A | A | A |
| 15 | 25 | 60 | 44.14 | 67.58 | 85.24 | 100.00 | A | A | A | A |
| 15 | 30 | 55 | 33.74 | 54.25 | 77.33 | 100.00 | A | A | A | B |
| 15 | 40 | 45 | 29.25 | 59.57 | 66.52 | 98.74 | A | B | B | C |
| 20 | 1 | 79 | 98.82 | 100.00 | 100.00 | 100.00 | A | A | A | A |
| 20 | 4 | 76 | 89.81 | 96.94 | 100.00 | 100.00 | A | A | A | A |
| 20 | 8 | 72 | 77.55 | 85.24 | 94.25 | 100.00 | A | A | A | A |
| 20 | 12 | 68 | 69.25 | 86.25 | 91.23 | 100.00 | A | A | A | A |
| 20 | 16 | 64 | 59.55 | 70.55 | 84.93 | 100.00 | A | A | A | A |
| 20 | 20 | 60 | 56.74 | 70.54 | 87.54 | 100.00 | A | A | A | A |
| 20 | 25 | 55 | 46.28 | 58.47 | 78.55 | 100.00 | A | A | A | A |
| 20 | 30 | 50 | 42.58 | 74.58 | 86.50 | 100.00 | A | A | A | A |
| 20 | 40 | 40 | 37.78 | 52.36 | 72.63 | 98.98 | A | A | B | B |
| 25 | 1 | 74 | 97.58 | 99.57 | 100.00 | 100.00 | A | A | A | A |
| 25 | 4 | 71 | 90.08 | 94.88 | 100.00 | 100.00 | A | A | A | A |
| 25 | 8 | 67 | 82.51 | 87.55 | 96.35 | 100.00 | A | A | A | A |
| 25 | 12 | 63 | 72.56 | 80.54 | 91.55 | 100.00 | A | A | A | A |
| 25 | 16 | 59 | 66.97 | 76.58 | 91.19 | 100.00 | A | A | A | A |
| 25 | 20 | 55 | 57.36 | 69.57 | 57.24 | 100.00 | A | A | A | A |
| 25 | 25 | 50 | 50.39 | 67.47 | 76.98 | 100.00 | A | A | A | A |
| 25 | 30 | 45 | 46.79 | 56.28 | 80.55 | 100.00 | A | A | B | B |

### Example 18. Preparation of Sauces Containing Inactivated Kluyveromyces marxianus cells and Medium Chain Triglyceride

Sauce of food with required particle size distribution was prepared by emulsification in a certain weight percentage of inactivated *Kluyveromyces* cell dry powder prepared in Example 5, medium chain triglyceride, and water. The specific steps are as follows:
(1) Adding the *Kluyveromyces* cell dry powder to water to the corresponding concentration and stirring until evenly diffused;
(2) Starting to shear emulsifying by emulsifying machine. Adding medium chain triglyceride slowly during the shearing process to keep the emulsification. Sampling every 2 minutes and detecting the particle size distribution of the sample by laser particle size analyzer, further emulsifying until the required particle size distribution to stop and obtain sauce of food composition containing inactivated *Kluyveromyces* cells. Observing the stability of the product at 25°C.

The results of the percentage content by weight of inactivated *Kluyveromyces* cell dry powder, medium chain triglyceride and water, the particle size distribution of composition, and the results of the stability test are shown in Table 21 (A is defined as no demulsification and no stratification at all; B is defined as slight demulsification and a little amount of stratification at the top of the product; C is defined as obvious demulsification and a complete oil and water stratification of product):

**Table 21. Results of composition, particle size distribution and stability test of sauces**

| Proportion | | | Particle size distribution (Frequency%) | | | | Stability Test | | | |
|---|---|---|---|---|---|---|---|---|---|---|
| Dry powd er% | Medi um chain trigly cerid e % | Wate r% | ≤5µm | ≤10µm | ≤50µm | ≤100µm | De mu Isifi cat ion of 7 da ys | De mul sific atio n of 14 day s | De mu Isifi cati on of 21 da ys | Dem ulsifi catio n of 28 days |
| 30 | 1 | 69 | 97.97 | 98.08 | 100.00 | 100.00 | A | A | A | A |
| 30 | 4 | 66 | 90.37 | 94.97 | 99.29 | 100.00 | A | A | A | A |
| 30 | 8 | 62 | 79.86 | 88.08 | 94.68 | 100.00 | A | A | A | A |
| 30 | 12 | 58 | 73.44 | 85.49 | 94.42 | 100.00 | A | A | A | A |
| 30 | 16 | 54 | 66.99 | 82.55 | 93.35 | 100.00 | A | A | A | A |
| 30 | 20 | 50 | 61.86 | 79.54 | 90.54 | 100.00 | A | A | A | A |
| 30 | 25 | 45 | 54.68 | 76.98 | 90.09 | 99.34 | A | A | A | A |
| 30 | 30 | 40 | 51.20 | 74.58 | 89.24 | 100.00 | A | A | A | A |
| 35 | 1 | 64 | 98.29 | 100.00 | 100.00 | 100.00 | A | A | A | A |
| 35 | 4 | 61 | 90.80 | 93.18 | 97.83 | 100.00 | A | A | A | A |
| 35 | 8 | 57 | 82.07 | 90.67 | 96.41 | 100.00 | A | A | A | A |
| 35 | 12 | 53 | 76.58 | 80.67 | 95.27 | 100.00 | A | A | A | A |
| 35 | 16 | 49 | 70.45 | 80.58 | 93.52 | 100.00 | A | A | A | A |
| 35 | 20 | 45 | 64.25 | 86.68 | 91.58 | 100.00 | A | A | A | A |
| 35 | 25 | 40 | 59.93 | 68.57 | 90.66 | 100.00 | A | A | A | A |
| 35 | 30 | 35 | 54.28 | 77.28 | 89.35 | 100.00 | A | A | A | A |
| 40 | 1 | 59 | 98.52 | 100.00 | 100.00 | 100.00 | A | A | A | A |
| 40 | 4 | 56 | 91.82 | 94.72 | 99.81 | 100.00 | A | A | A | A |
| 40 | 8 | 52 | 85.92 | 92.67 | 99.58 | 100.00 | A | A | A | A |
| 40 | 12 | 48 | 77.89 | 84.58 | 95.68 | 100.00 | A | A | A | A |
| 40 | 16 | 44 | 73.28 | 86.69 | 91.55 | 100.00 | A | A | A | A |
| 40 | 20 | 40 | 67.43 | 83.19 | 92.69 | 100.00 | A | A | A | A |
| 40 | 25 | 35 | 61.66 | 78.84 | 90.50 | 100.00 | A | A | A | A |
| 40 | 30 | 30 | 58.10 | 78.83 | 88.65 | 100.00 | A | A | A | A |
| 45 | 1 | 54 | 98.42 | 99.68 | 100.00 | 100.00 | A | A | A | A |
| 45 | 4 | 51 | 94.11 | 96.66 | 99.65 | 100.00 | A | A | A | A |
| 45 | 8 | 47 | 85.04 | 90.90 | 96.96 | 100.00 | A | A | A | A |
| 45 | 12 | 43 | 80.96 | 90.40 | 97.14 | 100.00 | A | A | A | A |
| 45 | 16 | 39 | 73.81 | 86.65 | 96.22 | 100.00 | A | A | A | A |
| 45 | 20 | 35 | 70.17 | 83.69 | 96.88 | 100.00 | A | A | A | A |
| 45 | 25 | 30 | 66.64 | 72.67 | 82.24 | 100.00 | A | A | A | A |
| 50 | 1 | 49 | 98.47 | 97.19 | 100.00 | 100.00 | A | A | A | A |
| 50 | 4 | 46 | 92.99 | 95.78 | 98.66 | 100.00 | A | A | A | A |
| 50 | 8 | 42 | 87.30 | 91.30 | 97.42 | 100.00 | A | A | A | A |
| 50 | 12 | 38 | 82.71 | 90.00 | 96.05 | 100.00 | A | A | A | A |
| 50 | 16 | 34 | 77.35 | 87.03 | 93.90 | 100.00 | A | A | A | A |
| 50 | 20 | 30 | 72.95 | 89.58 | 95.95 | 100.00 | A | A | A | A |
| 50 | 25 | 25 | 68.32 | 82.82 | 92.40 | 99.99 | A | A | A | A |
| 55 | 1 | 44 | 99.52 | 100.00 | 100.00 | 100.00 | A | A | A | A |
| 55 | 4 | 41 | 93.47 | 94.99 | 99.65 | 100.00 | A | A | A | A |
| 55 | 8 | 37 | 87.96 | 93.42 | 98.36 | 100.00 | A | A | A | A |
| 55 | 12 | 33 | 82.78 | 89.21 | 95.19 | 100.00 | A | A | A | A |
| 55 | 16 | 29 | 79.44 | 88.54 | 94.25 | 100.00 | A | A | A | A |
| 55 | 20 | 25 | 73.99 | 86.22 | 93.11 | 100.00 | A | A | A | A |
| 60 | 1 | 39 | 98.93 | 100.00 | 100.00 | 100.00 | A | A | A | A |
| 60 | 4 | 36 | 94.84 | 95.42 | 99.18 | 100.00 | A | A | A | A |
| 60 | 8 | 32 | 90.69 | 94.69 | 99.55 | 100.00 | A | A | A | A |
| 60 | 12 | 28 | 83.66 | 91.58 | 96.58 | 100.00 | A | A | A | A |
| 60 | 16 | 24 | 80.68 | 87.85 | 96.57 | 100.00 | A | A | A | A |
| 60 | 20 | 20 | 75.96 | 85.62 | 93.64 | 100.00 | A | A | A | B |
| 65 | 1 | 34 | 98.50 | 100.00 | 100.00 | 100.00 | A | A | A | A |
| 65 | 4 | 31 | 95.58 | 99.83 | 100.00 | 100.00 | A | A | A | A |
| 65 | 8 | 27 | 89.17 | 93.51 | 98.55 | 100.00 | A | A | A | A |
| 65 | 12 | 23 | 85.04 | 90.39 | 97.00 | 100.00 | A | A | A | A |
| 65 | 16 | 19 | 82.45 | 88.70 | 96.58 | 100.00 | A | A | A | A |
| 70 | 1 | 29 | 99.60 | 100.00 | 100.00 | 100.00 | A | A | A | A |
| 70 | 4 | 26 | 95.80 | 99.50 | 100.00 | 100.00 | A | A | A | A |
| 70 | 8 | 22 | 90.90 | 95.21 | 100.00 | 100.00 | A | A | A | A |
| 70 | 12 | 18 | 87.69 | 92.78 | 99.65 | 100.00 | A | A | A | A |

As results shown in Table 7, 14, 16, 18 and 20, beverages of food in the present disclosure were prepared by inactivated *Kluyveromyces marxianus* cells with rapeseed oil, coconut oil, high oleic sunflower seed oil, canola oil, and medium chain triglyceride, according to the proportion in the present disclosure, respectively. After shear emulsifying process until the particle sizes of each component in the suspension are all less than or equal to 100µm (the frequency of particle size≤100mµm is 100%), it is proved that all can maintain a stable and uniform status without stratification for at least 7 days at room temperature. It can even maintain a stable and uniform status without stratification for 28 days according to the preceding preferred proportion of beverages in the present disclosure (2.5-25% of inactivated *Kluyveromyces* cell powder, 1%-30% of edible oil).

As results shown in Table 9, 15, 17, 19 and 21, sauces of food in the present disclosure were prepared by inactivated *Kluyveromyces marxianus* cells with rapeseed oil, coconut oil, high oleic sunflower seed oil, canola oil, and medium chain triglyceride, according to the proportion in the present disclosure, respectively. After shear emulsifying process until the particle sizes of each component in the suspension are all less than or equal to 100µm (the frequency of particle size≤100mµm is 100%), it is proved that it can maintain a stable and uniform status without stratification for 28 days at room temperature.

Specifically, the edible oil is all common edible oil of different sources and nutrients that used in food industry, whose market price is at 10-300/L (canola oil is 10 CNY/L, high oleic acid sunflower seed oil is 16 CNY/L, coconut oil is 50 CNY/L, medium chain triglyceride is 300 CNY/L). The raw materials of food compositions in the present disclosure are cheap and have relatively low cost.

Understandably, Example 11-18 are exemplary embodiments. Except for inactivated *Kluyveromyces marxianus* cells, beverages or sauces of food had the same or similar stability during shelf life, which were prepared according to proportion in the present disclosure by the four other inactivated *Kluyveromyces* cells (*Kluyveromyces hubeiensis*, *Kluyveromyces wickerhamii, Kluyveromyces thermotolerans*, and *Kluyveromyces lactis*) in the present disclosure and edible oils other than rapeseed oil.

### Example 19. Stability Test of Food Products Prepared by Food Compositions Containing Inactivated Kluyveromyces marxianus cells

*Kluyveromyces* beverage was made of inactivated *Kluyveromyces marxianus* cell dry powder prepared in Example 5 according to shear emulsifying. Under the same method and proportion, the food composition was replaced by pea protein and sucrose fatty acid ester to obtain plant-based beverage and emulsifier beverage. The composition of beverages is shown in Table 22. The statuses of stratification and demulsification of the preceding three beverages were recorded on the on the 1^{st}, 3^{rd}, 7^{th}, 14^{th} and 28^{th} day after the preparation of beverages (A is defined as no demulsification and no stratification at all; B is defined as slight demulsification and a little amount of stratification at the top of the product; C is defined as obvious demulsification and a complete oil and water stratification of product). The observation results are shown in Table 23 below.

**Table 22. The composition of beverages**

| | Inactivated *Kluyveromyces marxianus* cell dry powder | Pea protein | Sucrose fatty acid ester | Rapeseed oil | Wate r |
|---|---|---|---|---|---|
| *Kluyveromyc* es beverage | 10% | - | - | 10% | 80% |
| Plant-based beverage | - | 10% | - | 10% | 80% |
| Emulsifier beverage | - | - | 10% | 10% | 80% |

**Table 23. Results of stability test**

| Shelf life | 1d | | 3d | | 7d | | 14d | | 28d | |
|---|---|---|---|---|---|---|---|---|---|---|
| Sampl e of observ ation | Strati ficati on | Demul sificati on | Strati ficati on | Demul sificati on | Strati ficati on | Demul sificati on | Strati ficati on | Demul sificati on | Strati ficati on | Demul sificati on |
| *Kluyve romyc* es bevera ge | None | A | None | A | None | A | None | A | None | A |
| Plant-based bevera ge | None | A | None | A | Obvi ous | C | Obvi ous | C | Obvi ous | C |
| Emulsi fier bevera ge | None | A | None | A | A little | B | A little | B | Obvi ous | C |

As shown in Table 23, the *Kluyveromyces* beverage prepared without exogenous food additives completely maintained a stable and uniform suspension status without stratification during the 28-day shelf life observation period, without any demulsification either; the plant-based beverage prepared without exogenous food additives showed obvious stratification and demulsification on the 7^{th} day during the 28-day shelf life observation period; the emulsifier beverage prepared by sucrose fatty acid ester which is an emulsifying food additive showed a little stratification and slight demulsification on the 7^{th} day, and obvious stratification and demulsification on the 28^{th} day during the 28-day shelf life observation period. It can be seen that *Kluyveromyces* beverage has the value of developing microbic beverages and microbic food raw materials.

The preceding descriptions of specific exemplary embodiments are for the purpose of explanation and illustration. These descriptions are not intended to limit the present disclosure to the precise form disclosed, and it is clear that many changes and variations can be made according to the preceding instructions. The purpose of selection and description of exemplary embodiments is to explain the specific principles and their practical applications of the present disclosure so that those skilled in the art can implement and utilize various exemplary embodiments and different options and changes of the present disclosure. The scope of the present disclosure is intended to be limited by the claims and their equivalents.

## Claims

1. A composition, **characterized in that** comprising the following raw materials in weight percentage: 2.5-80% of an inactivated *Kluyveromyces* cell, 1-50% of edible oil, and 18-96.5% of water.

2. The composition according to claim 1, **characterized in that** a particle size of the inactivated *Kluyveromyces* cell is 1-7µm:
preferably, the particle size of the inactivated *Kluyveromyces* cell is 2-5µm.

3. The composition according to claim 1 or 2, **characterized in that** the inactivated *Kluyveromyces* cell comprises 30-55% of protein, 1-5% of fat, and 15-30% of dietary fiber.

4. The composition according to any one of preceding claims, wherein the inactivated *Kluyveromyces* cell is selected from one or more of *Kluyveromyces* marxianus, *Kluyveromyces lactis*, *Kluyveromyces hubeiensis*, *Kluyveromyces wickerhamii*, and *Kluyveromyces thermotolerans* cell:
preferably, the inactivated *Kluyveromyces* cell is *Kluyveromyces marxianus* and/or *Kluyveromyces lactis* cell.

5. The composition according to any one of preceding claims, **characterized in that** a particle size of the edible oil is 1-100µm.

6. The composition according to any one of preceding claims, **characterized in that** the inactivated *Kluyveromyces* cell is dry inactivated *Kluyveromyces* cell mycelium, dehydrated inactivated *Kluyveromyces* cell, or inactivated *Kluyveromyces* cell mycelium suspension;
preferably, the inactivated *Kluyveromyces* cell is dry inactivated *Kluyveromyces* cell mycelium or inactivated *Kluyveromyces* cell mycelium suspension;
preferably, the edible oil is selected from one or more of soybean oil, rapeseed oil, high oleic sunflower seed oil, medium chain triglyceride, canola oil, coconut oil, corn oil, sesame oil, tea seed oil, rice bran oil, olive oil, linseed oil, safflower seed oil, grape seed oil, walnut oil, palm oil, peanut oil, and blend oil.

7. The composition according to any one of preceding claims, **characterized in that** a preparation method of the inactivated *Kluyveromyces* cell comprises following steps: selecting a medium containing carbon source, nitrogen source and salts to culture *Kluyveromyces* strain for 15-40 hours; regulating medium pH to 4.0-8.0, obtaining the inactivated *Kluyveromyces* cell by heating and inactivating after fermentation at 25-50°C.

8. A preparation method of the composition of any one of preceding claims, **characterized in that** comprising: mixing inactivated *Kluyveromyces* cell with water to form a cell suspension; adding edible oil in the process of shear emulsifying the cell suspension, keeping shear emulsifying until a particle size of the edible oil is 1-100µm.

9. A food product comprising the composition of any one of claims 1-7;
preferably, when the food product is a beverage, the composition comprises following raw materials in weight percentage: 2.5-25% of inactivated *Kluyveromyces* cell, 1-40% of edible oil, and 40-96.5% of water;
preferably, when the food product is a sauce, the composition comprises following raw materials in weight percentage: 30-70% of inactivated *Kluyveromyces* cell, 1-30% of edible oil, and 18-69% of water.

10. A use of the composition of any one of claims 1-7 in a preparation of a food product:
preferably, the use in a preparation of biscuits, bread, baked goods, puffed food, freeze-dry food, ice cream, and dehydrated food.
